# EUROPEAN PATENT SPECIFICATION

(11) **EP 4 270 912 B1**
(45) Date of publication and mention of the grant of the patent: **23.04.2025**
(21) Application number: 23170155.8
(22) Date of filing: 26.04.2023
(51) Int. Cl.: H04M 3/51, H04M 3/523

(54) **TECHNIQUES FOR COMPARATIVELY MEASURING PAIRING ALGORITHMS IN A CONTACT CENTER SYSTEM**
VERFAHREN ZUR VERGLEICHENDEN MESSUNG VON PAARUNGSALGORITHMEN IN EINEM KONTAKTZENTRUMSSYSTEM
TECHNIQUES PERMETTANT DE MESURER DE MANIÈRE COMPARATIVE DES ALGORITHMES D'APPARIEMENT DANS UN SYSTÈME DE CENTRE DE CONTACT

(30) Priority: 27.04.2022 US 202263335604 P; 14.04.2023 US 202363459537 P
(43) Date of publication of application: 01.11.2023
(60) Divisional application: 25161811.2
(73) Proprietor: Afiniti AI Limited, Dublin D02 PY28 (IE)
(72) Inventor: DEMIRTAS,, Umut, Istanbul (TR); KIRAC,, Mustafa, Istanbul (TR); ALLAND,, Kevin, Washington (US); RILEY,, Blake Jay, Washington (US)
(74) Representative: Carpmaels & Ransford LLP

(56) References cited:
- EP-A1- 3 373 216

## Description

### TECHNICAL FIELD

This disclosure generally relates to contact center systems and, more particularly, to techniques for improving comparative measurements of pairing algorithms in a contact center system.

### BACKGROUND

A typical contact center system algorithmically assigns contacts arriving at the contact center system to agents available to handle those contacts. At times, the contact center system may have agents available and waiting for assignment to inbound or outbound contacts (e.g., telephone calls, Internet chat sessions, email) or outbound contacts. At other times, the contact center system may have contacts waiting in one or more queues for an agent to become available for assignment.

In some typical contact center systems, contacts are assigned to agents ordered based on time of arrival, and agents receive contacts ordered based on the time when those agents became available. This algorithm may be referred to as a "first-in, first-out", "FIFO", or "round-robin" algorithm. For example, a longest-available agent pairing algorithm preferably selects the available agent who has been available for the longest time.

Some contact center systems may use a "performance based routing" or "PBR" approach to ordering the queue of available agents or, occasionally, contacts. PBR ordering algorithms attempt to maximize the expected outcome of each contact-agent interaction but do so typically without regard for utilizing agent hardware in a contact center system uniformly. Some variants of PBR may include a highest-performing-agent pairing algorithm, preferably selecting the available agent with the highest performance, or a highest-performing-agent-for-contact-type pairing algorithm, preferably selecting the available agent with the highest performance for the type of contact being paired.

For yet another example, some contact center systems may use a "behavioral pairing" or "BP" algorithm, under which contacts and agents may be deliberately paired in a fashion that better enables the pairing of subsequent contact-agent pairs Unlike FIFO, BP is designed to encourage balanced utilization of agent hardware. BP is described in, e.g., U.S. patent application Ser. No. 14/871,658 and patent EP 3186948 B1. Additional information about these and other features regarding the pairing or matching modules (sometimes also referred to as "SATMAP", "routing system", "routing engine", etc.) is described in, for example, U.S. Pat. No. 8,879,715.

BP algorithms may be two-dimensional ("2D"), in which a first dimension relates to agents and a second dimension relates to contacts. Accordingly, in 2D BP, agents and contacts are paired. Higher dimensional BP algorithms, such as three-dimensional ("3D"), are also available. In 3D BP, a first dimension relates to agents, a second dimension relates to contact, and a third dimension may relate to a further parameter. The 3D BP algorithm may be used to pair contacts and agents with a further parameter. Similarly, in N-dimensional BP, each of the N dimensions relates to a different parameter (e.g., agents, tasks, etc.) and the N-dimensional BP may be used to assign one of the parameters (e.g., agents) to the rest of the different parameters (e.g., contacts, etc.). More detailed information about the multi-dimensional BP is provided in U.S. patent No. 11,196,865, U.S. patent No. 10,917,526 and U.S. patent No. 10,757,262.

In some examples of 3D BP algorithms, contacts and agents are paired based on a resource availability. For example, in embodiments where there are actions available for agents to use (for example, routing the contact elsewhere, putting the contact on hold, etc.), a contact center may have a limited availability for each action (e.g., there may only be 100 instances available for action A, and only 100 instances available for action B). Considering two contact types, CT1 and CT2, both CT1 and CT2 accept action A, but only CT2 accepts action B. For this example, consider that during a fixed time, 200 contacts arrive, 120 of which are type CT1, and 80 of which are type CT2, both of which arrive randomly at the contact center system. In this context, contact type may reflect a characteristic of the contact, such as language spoken.

Under a traditional pairing algorithm which does not optimize resource availability, an agent may have determined that all contacts accept action A. Consequently, the agent does not suggest action B until there are no further A actions. Given this, it would be expected that, during the fixed time and under a conventional system, only 140 contacts of the 200 contacts could be serviced. That is, the agent will suggest action A to the first 100 contacts, 60 of which would be like CT1 and 40 of which would be like CT2. For the remaining 100 contacts, the agent will suggest action B, and only the remaining CT2 contacts would accept (e.g., 40 remaining CT2 contacts). By contrast, by using a 3D BP algorithm, 180 contacts would accept. That is, 3D BP algorithm determines that the agent should suggest action B to all 80 CT2 contacts, and action A to the first 100 CT1 contacts. Some contact centers may use a variety of other possible pairing algorithms. For example, in a longest-available agent pairing algorithm, an agent may be selected who has been waiting (idle) the longest time since the agent's most recent contact interaction (e.g., call) has ended. In a least-occupied agent pairing algorithm, an agent may be selected who has the lowest ratio of contact interaction time to waiting or idle time (e.g., time spent on calls versus time spent off calls). In a fewest-contact-interactions-taken-by-agent pairing algorithm, an agent may be selected who has the fewest total contact interactions or calls. In a randomly-selected-agent pairing algorithm, an available agent may be selected at random (e.g., using a pseudorandom number generator). In a sequentially-labeled-agent pairing algorithm, agents may be labeled sequentially, and the available agent with the next label in sequence may be selected.

When a contact center system changes from using one type of pairing algorithm (e.g., FIFO) to another type of pairing algorithm (e.g., PBR), overall contact center performance (e.g. average load at the contact center system, average traffic at the contact center system, average bandwidth utilization, average queue capacity, average resource use, average resource use efficiency, average queue time, average handle time, average response time, and the like) will vary over time. It can be difficult to validate a particular pairing algorithm by measuring the amount of performance change attributable to using the particular pairing algorithm because there are typically other factors that account for some of the increased or decreased performance over time. For example, there may be faulty hardware in the contact center system, such as a faulty processor, memory, or network interface that cause the contact center system to crash when using a particular pairing algorithm. In another example, there may be poor network connectivity or network outages over a period of time, leading to leading to call quality issues, dropped calls and generally lower performance over that period.

In certain contact center systems, comparatively measuring a pairing algorithm can be made more challenging when other pairing algorithms used in the contact center system are not provided by the same provider. For example, pairing algorithms from different providers may require or be optimized for different hardware resources, such as processing power, memory, or communication bandwidth, which may have an impact on the measured performance. For instance, a contact center system that has limited memory may not be able to properly support a pairing algorithm from a particular provider that requires a significant amount of memory, but this would not be readily apparent from the performance of the pairing algorithm due to other confounding factors. Moreover, pairing algorithms from different providers may require communication between different hardware components, such as processors, memory, or storage devices, which may have different faults. In some instances, pairing algorithms from different providers may require similar hardware resources, such as processing power, memory, or communication bandwidth, then they may compete with each other for these resources, which can lead to further variations in performance. The same can also happen with other resources in the contact center system such as agents and contacts.

The document EP3373216 is an example of background art and discloses the benchmarking of pairing strategies in a contact center system.

In view of the foregoing, it may be understood that there is a need for a system that enables and improves comparative measurements of pairing algorithms by accurately measuring changes in performance attributable to each of the pairing algorithms. Additionally, it may be understood that there is a need for a system that enables comparative measuring of pairing algorithms that are provided by different providers.

### SUMMARY

In a first aspect of the invention, there is provided a method for improving comparative measurements of pairing algorithms in a contact center according to claim 1. Preferred embodiments are provided by the dependent claims.

In a second aspect of the invention there is provided a computer program comprising instructions which when executed by at least one computer processor communicatively coupled to and configured to operate in a contact center system, cause the contact center system to perform the method of the first aspect of the invention.

In a third aspect of the invention there is provided contact center system comprising: a switch that is communicatively coupled to a plurality of agents; and at least one computer processor communicatively coupled to and configured to operate in the contact center system, wherein the at least one computer processor is configured to cause the contact center system to perform the method of the first aspect of the invention.

In a fourth aspect of the invention, there is provided a pairing module, the pairing module comprising: a memory and at least one computer processor communicatively coupled to and configured to operate in a contact center system, wherein the at least one computer processor is configured to cause the contact center system to perform the method of the first aspect of the invention. The present disclosure will now be described in more detail with reference to particular embodiments thereof as shown in the accompanying drawings. While the present disclosure is described below with reference to particular embodiments, it should be understood that the present disclosure is not limited thereto, and that the invention is defined by the appended claims. Those of ordinary skill in the art having access to the teachings herein will recognize additional implementations, modifications, and embodiments, as well as other fields of use, which are within the scope of the present disclosure as described herein, and with respect to which the present disclosure may be of significant utility.

### BRIEF DESCRIPTION OF THE DRAWINGS

In order to facilitate a fuller understanding of the present disclosure, reference is now made to the accompanying drawings, in which like elements are referenced with like numerals. These drawings should not be construed as limiting the present disclosure but are intended to be illustrative only.
FIG. 1A shows a block diagram of a first contact center system for implementing embodiments of the present disclosure.
FIG. 1B shows a block diagram of a second contact center system for implementing embodiments of the present disclosure.
FIG. 2A shows a block diagram of a first example communication system for implementing embodiments of the present disclosure.
FIG. 2B shows a block diagram of a second example communication system for implementing embodiments of the present disclosure.
FIG. 2C shows a block diagram of a third example communication system for implementing embodiments of the present disclosure.
FIG. 2D shows a block diagram of a fourth example communication system for implementing embodiments of the present disclosure.
FIG. 3 shows an apparatus according to some embodiments. FIG. 4A shows a schematic representation of an epoch switching sequence according to embodiments of the present disclosure.
FIG. 4B shows a schematic representation of an epoch switching sequence according to embodiments of the present disclosure.
FIG. 5A shows a schematic representation of an epoch switching sequence according to embodiments of the present disclosure.
FIG. 5B shows a schematic representation of an epoch switching sequence according to embodiments of the present disclosure.
FIG. 6A shows a schematic representation of an epoch switching sequence according to embodiments of the present disclosure.
FIG. 6B shows a schematic representation of an epoch switching sequence according to embodiments of the present disclosure.
FIG. 6C shows a schematic representation of an epoch switching sequence according to embodiments of the present disclosure.
FIG. 6D shows a schematic representation of an epoch switching sequence according to embodiments of the present disclosure.
FIG. 7 shows a flow diagram of a comparative measuring method using in-line switching according to embodiments of the present disclosure.
FIG. 8 depicts a block diagram of a comparative measuring method using hybrid switching according to embodiments of the present disclosure.
FIG. 9A shows a schematic representation of a switching sequence for more than two pairing algorithms according to embodiments of the present disclosure.
FIG. 9B shows a schematic representation of a switching sequence for more than two pairing algorithms according to embodiments of the present disclosure.
FIG. 10A shows an example of an epoch switching sequence according to some embodiments.
FIG. 10B shows an example of an inline switching sequence according to some embodiments.
FIG. 11A shows an example of a hybrid switching sequence according to some embodiments.
FIG. 11B shows an example of a hybrid switching sequence according to some embodiments.
FIG. 12 shows a process according to some embodiments.
FIG. 13 shows a process according to some embodiments.
FIG. 14A shows an example of a hybrid switching sequence according to some embodiments.
FIG. 14B shows an example of a hybrid switching sequence according to some embodiments.
FIG. 15A shows an example of a hybrid switching sequence according to some embodiments.
FIG. 15B shows an example of a hybrid switching sequence according to some embodiments.
FIG. 16A shows an example of a hybrid switching sequence according to some embodiments.
FIG. 16B shows an example of hybrid switching sequence according to some embodiments.

### DETAILED DESCRIPTION

### Contact center systems

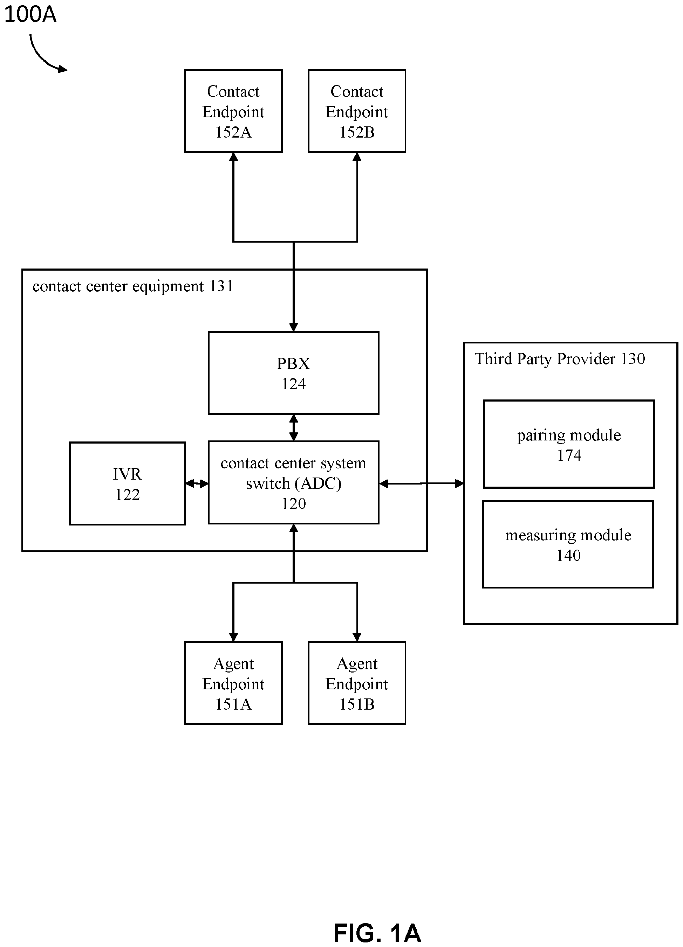

FIG. 1A shows a block diagram of an example contact center system 100A for implementing embodiments of the present disclosure. Contact center systems, such as the one depicted in FIG. 1A, are used to establish a connection between a contact and an agent. More particularly, contact center systems are used to establish a connection across a telecommunications network between the contact's terminal or computing device (e.g., a mobile device, a computer, and the like) and the agent's terminal or computing device (e.g. a mobile device, a computer, and the like). Thus, when "contact" and "agent" are referred to herein, it should be understood as a reference to the contact's terminal or computing device and the agent's terminal or computing device, respectively, rather than necessarily just the user of said terminal or computing device. In FIG. 1A, the contact's terminal or computing device is represented by contact endpoints 152A and 152B, whilst the agent's terminal or computing device is represented by agent endpoints 151A and 151B.

The contact center system 100A may include enterprise client contact center equipment 131. The contact center equipment 131 is configured to receive incoming contacts via a telecommunications network (not shown) and/or support outbound connections from to contacts via a telecommunications network (not shown). The contact center equipment 131 includes various routing hardware and/or associated software to route contacts through the contact center system 100A and to an agent. In particular, the contact center equipment 131 includes a switch 120 to receive incoming contacts via a telecommunications network (not shown) and/or support outbound connections from to contacts via a telecommunications network (not shown). Routing through the contact center system 100A may involve routing via queuing and/or switching components within the contact center system 100A. The nature of the queuing and switching components depends on the type of connection established between the agents and contacts, which in turn depends on the capabilities of the contact's computing device and the agent's computing device.

In the example in FIG. 1A, the contact center switch 120 is used to establish voice calls between contacts (i.e., callers) and agents. In other words, the switch 120 in this example may be an ACD (Automatic Call Distributor). Accordingly, the contact center switch 120 of FIG. 1A interacts with a IVR (Interactive Voice Response) 122 and PBX (Private Branch Exchange) 124. IVR 122 is a computerized phone system that interacts with contacts to gather information that may be provided to the switch 120 to pair the caller to an appropriate agent. Switch 120 is responsible for routing incoming calls to an available agent based on a pairing algorithm. As used herein, the term "available agent" is a reference to an agent that is not already occupied by another contact. When switch 120 selects an agent to be connected to a contact, it sends a message to the telephony infrastructure of the contact center equipment 131, which routes the incoming contact to the appropriate agent. This routing can be done through various protocols, such as SIP or ISDN, depending on the specific telecommunications hardware and software used in the contact center system 100A. Switch 120 is also responsible for provisioning queues of contacts. A contact waiting in a queue of contacts is referred to herein as an "available contact". Switch 120 is also aware of which agents are available for connecting to a contact. PBX 124 may be used to connect the agent's telecommunications hardware to the caller's phone line.

Contact center systems may support other types of connection between the contact and agent, not just voice calls as shown in the example of FIG. 1A. A contact center system may handle one or more of voice calls (including over PSTN (Public Switched Telephone network) and VoIP (Voice over Internet Protocol)), emails, live chat, social media, SMS, and video calls. For instance, for emails, contacts may send an email to a dedicated email address accessed by the contact center system to request assistance by an agent. For live chat, a contact center system may support live chat interactions, where contacts can communicate with agents in real-time via a chat interface on a website or mobile app. For social media, contact center systems may manage contact interactions on social media platforms such as Twitter, Facebook, or LinkedIn, where contacts can send messages. Some contact center systems support SMS/text messaging interactions, where contacts send and receive text messages to the contact center system. Contact center systems may also support video calls, where contacts communicate with agents in real-time via a video conferencing platform.

In some embodiments, switch 120 of the contact center system 100A may be communicatively coupled to one or more modules. Such modules may include one or more pairing modules (e.g., pairing module 174), which each store a pairing algorithm that is used by the switch 120 to pair agents and contacts together, and/or measuring module 140, which is used to validate pairing algorithms used by the switch 120. In some embodiments, these modules may be embedded within a component of a contact center system 100A. For example, the modules may be embedded in or otherwise integrated with switch 120, for instance within contact center equipment 131. In other embodiments, as shown in FIG. 1A, the modules may be external to the contact center equipment 131 of the contact center system 100A. External modules, such as measuring module 140 and pairing module 174 of FIG. 1A, may receive information from the switch 120 about agents logged into the switch (e.g., agents 151A and 151B) and about incoming contacts (e.g. contacts 152A and 152B) or, in some embodiments, from a network (e.g., the Internet or a telecommunications network) (not shown). In further embodiments, there may be a combination of modules embedded within a component of the contact center system 100A in addition to external modules.

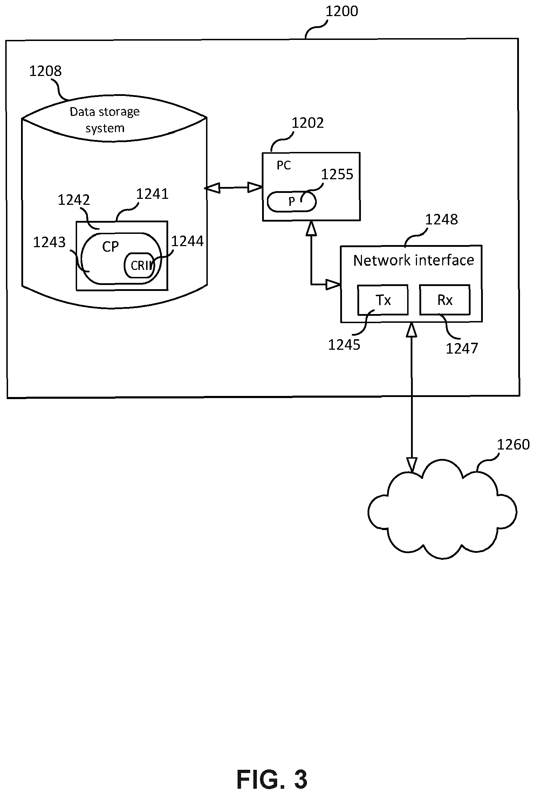

When the contact center system 100A uses a plurality of pairing algorithms for pairing agents and contacts, there may be a plurality of pairing modules. Different pairing modules of the plurality of pairing modules may be provided by different providers. In this context, a "provider" is responsible for providing the pairing module and may have its own hardware and/or software for provisioning the pairing module. In FIG. 1A, pairing module 174 is provided by a third-party provider 130. That is to say that the pairing module 174, and thus its underlying pairing algorithm, are not provided by the same provider as the contact center equipment 131 of contact center system 100A (i.e., a first party provider). Third party provider 130 may have its own hardware and/or software that is communicatively coupled to the contact center system 100A, or may integrate its hardware and/or software with the contact center system 100A. Such hardware and/or software is discussed in further detail with respect to FIG. 3. In some embodiments, different pairing modules 174 may be provided by different third-party providers. In other embodiments, one provider may provide multiple different pairing modules 174. In further embodiments, at least one of the pairing modules may be provided by the contact center system 100A itself (i.e., not by a third-party provider). Any combinations of these embodiments are also possible. For instance, the contact center system 100A may provide a first pairing module, and a third-party provider provide a second and third pairing modules.

Measuring module 140 may similarly be provided by either the contact center system 100A itself, by third-party provider 130, or by both. FIG. 1A shows an embodiment in which the third-party provider 130 provides the measuring module 140. The measuring module 140 is responsible for recording information about connections between agents and contacts that have occurred at the contact center system 100A. This information is used to record which pairing module (and thus pairing algorithm) had been used to make the pairing, and to validate the pairing module. Information recorded by the measuring module 140 includes performance metrics that may be used for comparative measurements of pairing algorithms. Further details about different performance metrics that may be used for comparative measuring are discussed further herein.

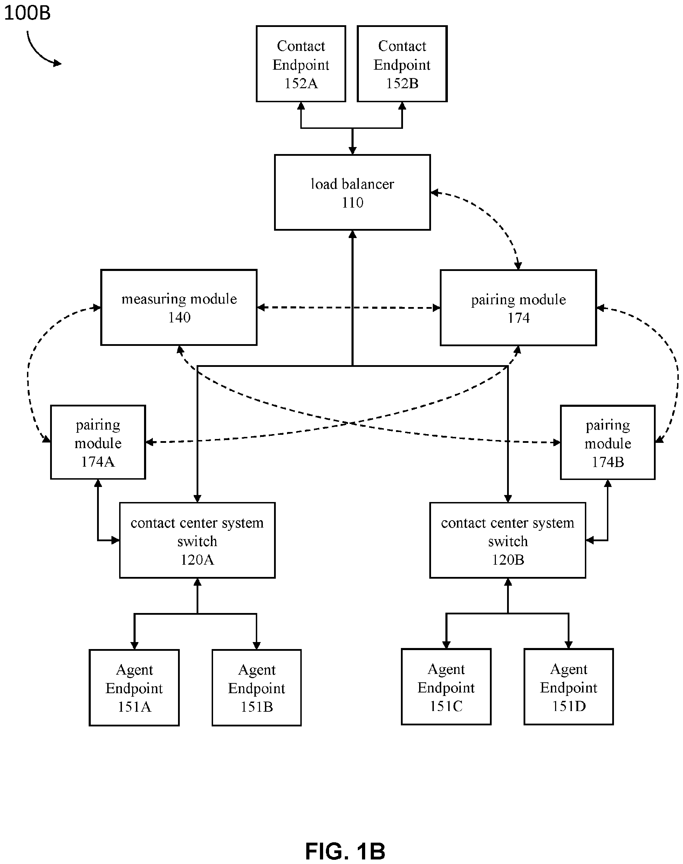

FIG. 1B shows a block diagram of a further example contact center system 100B for implementing embodiments of the present disclosure. As shown in FIG. 1B, the contact center system 100B may include a load balancer 110. The load balancer110 may receive incoming contacts (e.g., callers) via a telecommunications network (not shown) and/or support outbound connections to contacts via a telecommunications network (not shown). In some embodiments, the contact center system may include multiple load balancers, which may be configured hierarchically (not shown).

The load balancer 110 may include contact routing hardware and/or software to route contacts among one or more secondary contact center systems (e.g. contact center system 100A of FIG. 1A), or to one or more PBX/ACDs or other queuing or switching components within the contact center system 100B in a similar manner to switch 120 discussed with respect to FIG. 1A. In some embodiments, the load balancer 210 may support outbound connections to contacts via a dialer, a telecommunications network, or other modules (not shown).

The load balancer 110 may not be necessary if there is only one contact center system (e.g., like contact center system 100A of FIG. 1A), or if there is only one PBX/ACD routing component (i.e. switch), in the contact center system 100B. If more than one secondary contact center system is part of the overall contact center system 100B, each secondary contact center system may include at least one switch (e.g., switches 120A and 120B). The contact center switches 120A and 120B may be communicatively coupled to the load balancer 110. It is noted that, although FIG. 1B shows two secondary contact center systems, each having a respective switch, three or more contact center systems are also possible. Secondary contact centers may also be referred to as subcenters.

Each contact center switch (e.g., switch 120 of FIG. 1A or switches 120A, 120B of FIG. 1B) may be communicatively coupled to a plurality (or "pool") of agents. Each contact center switch may support a certain number of agents (or "seats") to be logged in at one time. This is because of inherent limitations in switch hardware and software. At any given time, a logged-in agent may be available and waiting to be connected to a contact (i.e. they may be an "available agent"), or the logged-in agent may be unavailable for any of a number of reasons, such as being connected to another contact, performing certain post-call functions such as logging information about the call.

In the example of FIG. 1A, the load balancer 110 routes contacts to one of two contact center systems via contact center switch 120A and contact center switch 120B, respectively. Each of the contact center switches 120A and 120B are shown with two agents each. Agents 151A and 151B may be logged into contact center switch 120A, and agents 151C and 151D may be logged into contact center switch 120B.

The contact center system 100B, like contact center system 100A, may also be communicatively coupled to an integrated service from, for example, a third-party provider. For example, pairing module 174 and/or measuring module 140 may be communicatively coupled to one or more switches of the contact center system 100B, such as contact center switch 120A, and contact center switch 120B, as well as load balancer 110. In some embodiments, switches of the contact center system 100B may be communicatively coupled to multiple pairing and/or measuring modules. In some embodiments, pairing module 174 and/or measuring module 140 may be embedded within a component of a contact center system 100B (e.g., embedded in or otherwise integrated with a switch in the contact center equipment 131). The pairing module 174 and/or the measuring module 140 may receive information from a switch (e.g., contact center switch 120A) about agents logged into the switch (e.g., agents 151A and 151B). The pairing module 174 and/or the measuring module 140 may receive information about incoming contacts via load balancer 110, or, in some embodiments, from a network (e.g., the Internet or a telecommunications network) (not shown).

In the example contact center system 100B of FIG. 1B, each contact center switch (i.e., switch 120A and switch 120B) is communicatively coupled to a respective secondary pairing module 174A and 174B. In this example, the pairing module 174, which is communicatively coupled to the load balancer 110, acts as a primary pairing module to the secondary pairing modules. As shown in FIG. 1B, the secondary pairing modules 174A, 174B are communicatively coupled to the primary pairing module 174. In this example, the measuring module 140 is communicatively coupled to the primary and secondary pairing modules. The measuring module 140 therefore receives information from all pairing modules in contact center system 100B.

As discussed with respect to contact center system 100A of FIG. 1A, contact center system 100B may include multiple pairing modules (not shown), including multiple sets of primary and secondary pairing modules. One or more of the pairing modules or sets of primary and secondary pairing modules may be provided by one or more different providers, as further discussed with respect to FIG. 1A. In some embodiments, one or more pairing modules may be components of measuring module 140 or one or more switches such as contact center switches 120A and 120B. In some embodiments, a measuring module 140 may determine which pairing module or set of primary and secondary pairing modules may handle pairing for a particular contact. For example, the measuring module 140 may alternate between enabling pairing via the first pairing module (e.g., BP) and enabling pairing with a second pairing module (e.g. FIFO). In other embodiments, one pairing module (e.g., the BP module) may be configured to emulate the pairing algorithm of other pairing modules. For example, measuring module 140, or a measuring module 140 integrated with a pairing module 174, may determine whether the pairing module may use a first pairing algorithm (e.g., BP) or a second pairing algorithm (e.g. emulated FIFO) for a particular contact. In this case, "BP on" may refer to times when the module is applying the BP pairing algorithm, and "BP off" may refer to other times when the module is applying a different pairing algorithm (e.g., FIFO).

In some embodiments, regardless of whether pairing algorithms are handled by separate modules, or if some pairing algorithms are emulated within a single pairing module, the single pairing module may be configured to monitor and store information about pairings made under any or all pairing algorithms. For example, a BP module may observe and record data about FIFO pairings made by a FIFO module, or the BP module may observe and record data about emulated FIFO pairings made by a BP module operating in FIFO emulation mode.

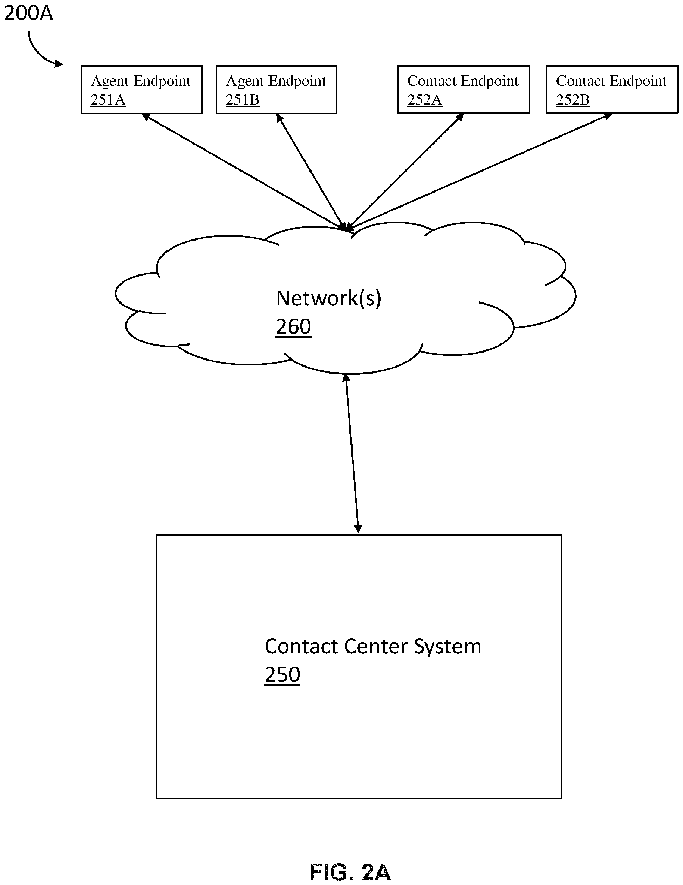

FIG. 2A illustrates a first example communication system 200A for implementing embodiments of the present invention. As shown in FIG. 2A, the communication system 200A includes one or more agent endpoints 251A, 251B and one or more contact endpoints 252A, 252B. The agent endpoints 251A, 251B may include an agent terminal and/or an agent computing device (e.g., laptop, cellphone). The contact endpoints 251A, 251B may include a contact terminal and/or a contact computing device (e.g., laptop, cellphone). Agent endpoints 251A, 151B and/or contact endpoints 152A, 152B may connect to contact center system 250 (e.g., contact center system 100A of FIG. 1A, contact center system 100B of FIG. 1B) through one or more telecommunications networks 260 according to the capabilities of the endpoint devices. For instance, the telecommunications network(s) may be the Internet or a PSTN.

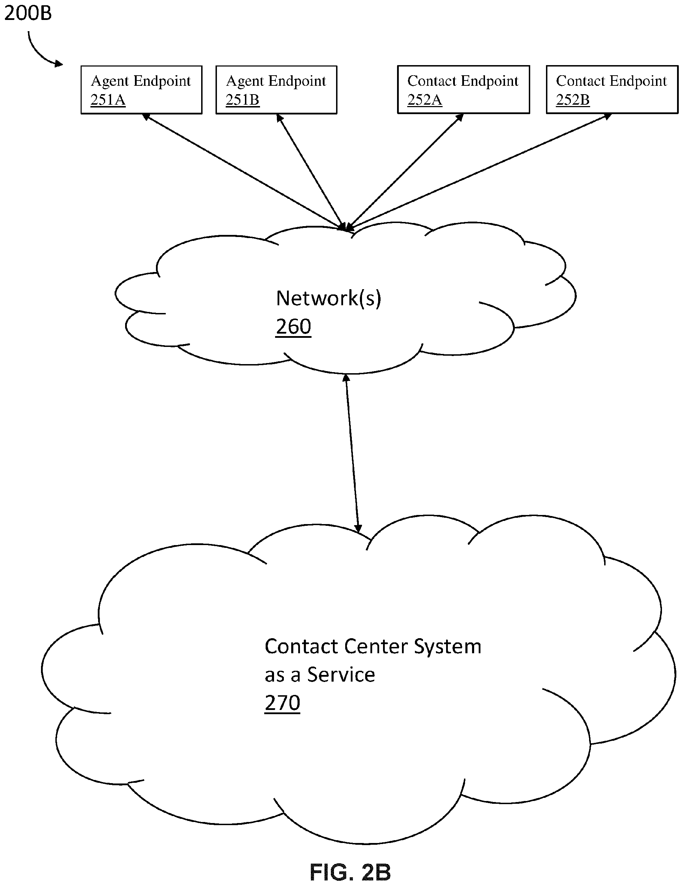

FIG. 2B illustrates a second example communication system 200B for implementing embodiments of the present invention. Like communication system 200A of FIG. 2A, the communication system 200B of FIG. 2B may include one or more agent endpoints 251A, 251B and one or more contact endpoints 252A, 252B. Again, the agent endpoints 251A, 251B may include an agent terminal and/or an agent computing device (e.g., laptop, cellphone). The contact endpoints 251A, 251B may include a contact terminal and/or a contact computing device (e.g., laptop, cellphone). Agent endpoints 251A, 251B and/or contact endpoints 252A, 252B may connect to a Contact Center as a Service (CCaaS) 270 through either the Internet or a public switched telephone network (PSTN), according to the capabilities of the endpoint device. Like contact center system 250 of FIG. 2A, CCaaS 270 may include or be communicatively coupled to one or more pairing modules 174 and a measuring module 140.

CCaaS 270 is a cloud-based version of contact center system 250. Like contact center system 250, CCaaS 270 handles communication between contacts and agents over various communication channels such as voice call, email, chat, social media, and the like. Like contact center system 250, CCaaS 270 typically includes components such as switch 120, IVR 122, among others. Instead of building and maintaining a physical contact center system infrastructure, CCaaS 270 access virtual contact center system infrastructure via a cloud computing environment. Cloud computing hardware may be built and maintained by another party. This has several advantages, such as scalability, flexibility, the ability for agents to be remote (with a cloud-based infrastructure, CCaaS 270 enables agent endpoints to be at any physical any location with Internet access), automatic updates to the cloud hardware and/or software, and more.

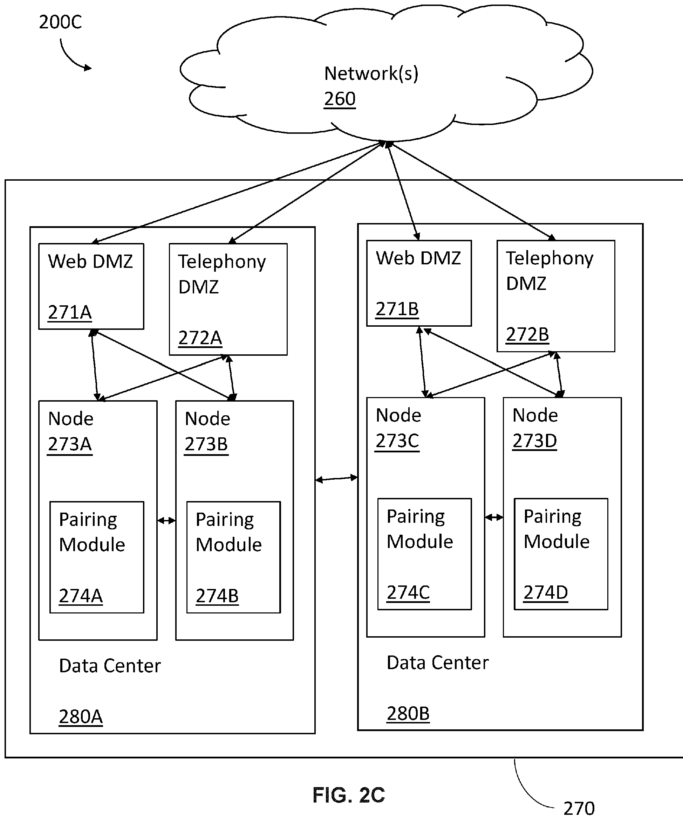

FIG. 2C illustrates an example communication system 200C with an example configuration of a CCaaS 270. For example, a CCaaS 270 may include multiple data centers 280A, 280B. The data centers 280A, 280B may be separated physically, even in different countries and/or continents. The data centers 280A, 280B may communicate with each other. For example, one data center is a backup for the other data center; so that, in some embodiments, only one data center 280A or 280B receives agent endpoints 251A, 251B and contact endpoints 252A, 252B at a time.

Each data center 280A, 280B includes web demilitarized zone equipment 271A and 271B, respectively, which is configured to receive the agent endpoints 251A, 251B and contact endpoints 252A, 252B, which are communicatively connecting to CCaaS via the Internet. Web demilitarized zone (DMZ) equipment 271A and 271B may operate outside a firewall to connect with the agent endpoints 251A, 251B and contact endpoints 252A, 252B while the rest of the components of data centers 280A, 280B may be within said firewall (besides the telephony DMZ equipment 272A, 272B, which may also be outside said firewall). Said firewall is not shown in FIG. 2C. Similarly, each data center 280A, 280B includes telephony DMZ equipment 272A and 272B, respectively, which is configured to receive agent endpoints 251A, 251B and contact endpoints 252A, 252B, which are communicatively connecting to CCaaS via the PSTN. Telephony DMZ equipment 272A and 272B may operate outside a firewall to connect with the agent endpoints 251A, 251B and contact endpoints 252A, 252B while the rest of the components of data centers 280A, 280B (excluding web DMZ equipment 271A, 271B) may be within said firewall.

A firewall and the DMZs may be used in CCaaS 270 to enhance security and protect the CCaaS 270 from external threats. The firewall may monitor and control incoming and outgoing network traffic based on predefined security policies, acting as a barrier between the CCaaS 270 and the telecommunications network(s) 260, filtering out potentially harmful traffic and allowing only authorized traffic to pass through. In CCaaS 270, a firewall is particularly useful to protect sensitive contact data, such as personal data, from being accessed or stolen by malicious actors. The DMZs (i.e., web DMZ 271A, 271B and telephony DMZ 272A, 272B) each act as a separate network segment that sits between the internal components of the data center 280A, 280B (e.g. the nodes 273A, 273B, 273C, 273D, as further discussed below) and the telecommunications network(s) 260. The DMZs provide an extra layer of security by isolating sensitive resources from external threats. In CCaaS 270, the DMZs may be used to host public-facing services, such as a website or a contact portal, while keeping the internal network (i.e., the node) and sensitive data protected behind the firewall. By using the firewall and DMZs with the CCaaS 270, this ensures that the CCaaS 270 is protected against external threats and that contact data is kept secure.

Further, each data center 280A, 280B may include one or more nodes 273A, 273B, and 273C, 273D, respectively. The nodes provide redundant back-ups for each other in case a particular node (or an entire data center) goes offline. All nodes 273A, 273B and 273C, 273D may communicate with web DMZ equipment 271A and 271B, respectively, and with telephony DMZ equipment 272A and 272B, respectively. In some embodiments, only one node in each data center 280A, 280B may be communicating with web DMZ equipment 271A, 271B and with telephony DMZ equipment 272A, 272B at a time.

Each node 273A, 273B, 273C, 273D may have one or more pairing modules 274A, 274B, 274C, 274D, respectively. Similar to pairing module 174 of contact center system 100A of FIG. 1A and contact center system 100B of FIG. 1B, which form part of communications system 200A of FIG. 2A, pairing modules 274A, 274B, 274C, 274D may pair contacts to agents. For example, the pairing module may alternate between enabling pairing via a Behavioral Pairing (BP) module and enabling pairing with a First-in-First-out (FIFO) module. In other embodiments, as previously discussed, one pairing module (e.g., the BP module) may be configured to emulate other pairing strategies.

Each node 273A, 273B, 273C, 273D may have pairing modules from one or more providers. In one example embodiment, each node may contain the modules of third-party provider 130 shown in FIG. 1A (i.e. pairing module 174 and measuring module 140). In another example embodiment, each node may contain the modules of a plurality of third-party providers. In a further example, each node may contain the modules of a third-party provider and a first party provider. Each node may contain virtualized components of contact center equipment 131 of FIG. 1A (i.e., PBX 124, IVR 122, switch/ADC 120).

A measuring module (not shown), like measuring module 140 of FIG. 1A and 1B, may also be provided in one or more of the nodes for each data center. For example, node 273A or node 273B of data center 280A may provide a measuring module.

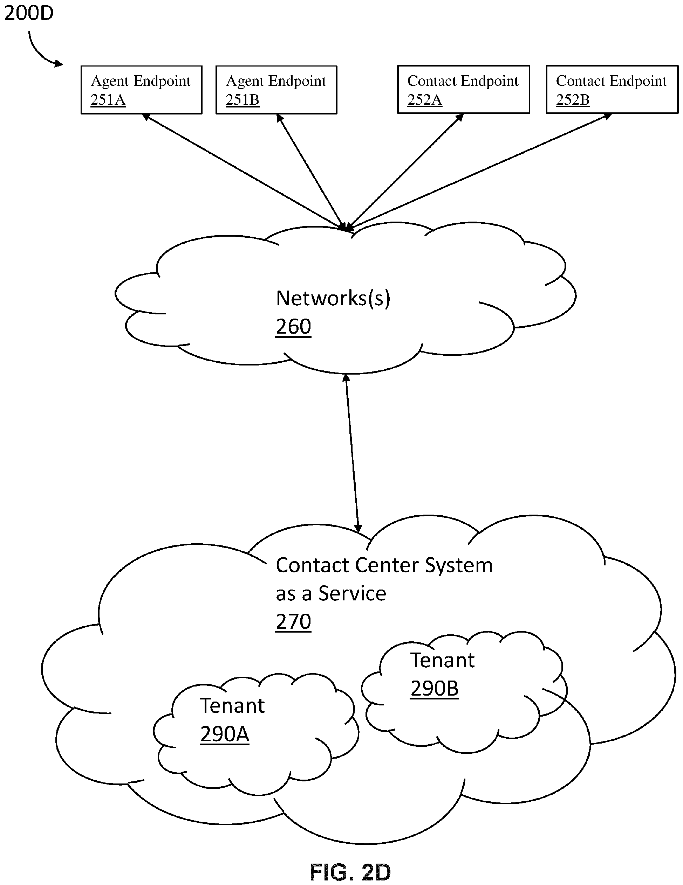

Turning now to FIG. 2D, the disclosed CCaaS communication systems (e.g., FIGs. 2B and/or 2C) may support multi-tenancy such that multiple (virtual) contact center systems may be operated on a shared cloud environment. That is, each tenant may have a separate, nonoverlapping pool of agents. CCaaS 270 is shown in FIG. 2D as comprising two tenants 290A and 290B. Turning back to FIG. 2C, for example, multi-tenancy may be supported by node 273A supporting tenant 290A while node 273B supports 290B. In another embodiment, data center 280A supports tenant 290A while data center 280B supports tenant 290B. In another example, multi-tenancy may be supported through a shared machine or shared virtual machine; such at node 273A may support both tenants 290A and 290B, and similarly for nodes 273B, 273C, and 273D.

In other embodiments, the system may be configured for a single tenant within a dedicated environment such as a private machine or private virtual machine.

FIG. 3 is a block diagram of an apparatus 1200, according to some embodiments, for performing the methods of the present disclosure. The apparatus may form part of contact center system 100A of FIG. 1A, contact center system 100B of FIG. 1B, contact center system 250 of FIG. 2A, contact center system as a service 270 in FIG. 2B-2D. Additionally or alternatively, the apparatus may be provided by a third party provider, for example third party provider 130 of FIG. 1A. As shown in FIG. 3, apparatus 1200 comprises processing circuitry (PC) 1202, which may include one or more processors (P) 1255 (e.g., a general-purpose microprocessor and/or one or more other processors, such as an application specific integrated circuit (ASIC), field-programmable gate arrays (FPGAs), and the like). The one or more processors 1255 may be co-located in a single contact center system (e.g., at contact center system 100A of FIG. 1A, contact center system 100B of FIG. 1B, contact center system 250 of FIG. 2A). For example, with reference to FIG. 1A, one there may be one processor 1255 associated with the contact center switch 120 and another processor 1255 associated with the third-party provider 130. Alternatively, the one or more processor 1255 may be co-located in a single data center (e.g., data center 280A and 280B of FIG. 2C) or may be geographically distributed (i.e., apparatus 1200 may be a distributed computing apparatus, such as the cloud-based CCaaS 270 of FIG. 2B-2D having). Apparatus 1200 also comprises a network interface 1248 comprising a transmitter (Tx) 1245 and a receiver (Rx) 1247 for enabling apparatus 1200 to transmit data to and receive data from other nodes connected to one or more telecommunications network(s) 1260 (e.g., an Internet network, a PSTN network) to which network interface 1248 is connected (directly or indirectly) (e.g., network interface 1248 may be wirelessly connected to the network 1260, in which case network interface 1248 is connected to an antenna arrangement). Apparatus also comprises data storage system 1208, which may include one or more non-volatile storage devices and/or one or more volatile storage devices. In embodiments, a computer program product (CPP) 1241 may be provided in the data storage system 1208. CPP 1241 includes a computer readable medium (CRM) 1242 storing a computer program (CP) 1243 comprising computer readable instructions (CRI) 1244. CRM 1242 may be a non-transitory computer readable medium, such as, magnetic media (e.g., a hard disk), optical media, memory devices (e.g., random access memory, flash memory), and the like. The CP 1243 (and thus CRI 1244), when executed by the one or more processors 1255 is configured to implement the methods of the present invention in combination with the hardware of the contact center system (e.g. as described for contact center system 100A of FIG. 1A, contact center system 100B of FIG. 1B, contact center system 250 of FIG. 2A, and CCaaS of FIG. 2B-2D).. In other embodiments, apparatus 1200 may be configured to perform the methods of the invention described herein without the need for CP 1243 (and thus CRI 1244). That is, for example, PC 1202 may consist merely of one or more ASICs. Hence, the features of the embodiments described herein may be implemented in hardware and/or software.

At this point it should be noted that pairing in a contact center system in accordance with the present disclosure as described above may involve the processing of input data and the generation of output data to some extent. This input data processing and output data generation may be implemented in hardware or software. For example, specific electronic components may be employed in a pairing module or similar or related circuitry for implementing the functions associated with behavioral pairing in a contact center system in accordance with the present disclosure as described above. Preferably, one or more processors operating in accordance with instructions may implement the functions associated with pairing in a contact center system in accordance with the present disclosure as described above. If such is the case, it is within the scope of the present disclosure that such instructions may be stored on one or more non-transitory processor readable storage media (e.g., a magnetic disk or other storage medium), or transmitted to one or more processors via one or more signals embodied in one or more carrier waves.

### Contact center performance

Contact center systems (e.g., contact center system 100A of FIG. 1A, contact center system 100B of FIG. 1B, contact center system 250 of FIG. 2A, contact center system as a service 270 in FIG. 2B-2D) may measure performance based on a variety of metrics. Contact center system performance refers to the ability of the contact center system to effectively and efficiently handle interactions between contacts and agents, while providing a robust and dependable experience to both parties. This can be measured by various technical metrics. For example, a contact center may measure performance based on one or more of: average load at the contact center system, average traffic at the contact center system, average bandwidth utilization, average queue capacity, average resource use, average resource use efficiency, average queue time, average handle time, average response time, call quality, etc. The metrics may be measured by the contact center system by various techniques known in the art. Moreover, the metrics may be measured by a measuring module of a contact center system (e.g., measuring module 140 of FIG. 1A and FIG. 1B). Notably, the technical metrics are particularly important when the contact center system is implemented as a CCaaS as the hardware assigned to the CCaaS scales with demand.

Regardless of what metric or combination of metrics a contact center system uses to measure performance, or what pairing algorithm (e.g., FIFO, PBR, BP) a contact center system uses, performance may vary over time. For example, year-over-year contact center system performance may vary, month-to-month contact center system performance may vary, day-to-day contact center system performance may vary, and even intra-hour contact center system performance may vary. This may be because the contact center may experience increased load and/or throughput during certain periods of time which may vary the performance measurements. In other instances, this may be because there is faulty hardware in the contact center system, such as a faulty processor, memory, or network interface that cause the contact center system to crash when using a particular pairing algorithm. In other instances, there may be poor network connectivity or network outages over a period of time, leading to leading to call quality issues, dropped calls and generally lower performance over that period. In further instances, the hardware of the contact center system may be upgraded between time periods.

These examples of variability at certain times of day or over larger time periods can make it difficult to attribute changes in performance over a given time period to a particular pairing algorithm. For example, if a contact center system used FIFO routing for one year with an average performance of 20% resource use efficiency, then switched to PBR in the second year with an average performance of 30% resource use efficiency, the apparent change in performance is a 50% improvement. However, this contact center system may not have a reliable way to know what the average performance in the second year would have been had it kept the contact center system using FIFO routing instead of PBR. In real-world situations, at least some of the 50% gain in performance in the second year may be attributable to other factors or variables that were not controlled or measured. For example, the contact center system may have been upgraded to more efficient hardware, such as processors with one or more efficiency cores. Consequently, contact center systems may struggle to measure the performance difference from switching to a different pairing algorithm due to challenges associated with measuring performance difference attributable to the new pairing algorithm.

Moreover, comparatively measuring a particular pairing algorithm can be made more challenging when other pairing algorithms used in the contact center system are not provided by the same provider. For example, pairing algorithms from different providers may require or be optimized for different hardware resources, such as processing power, memory, or communication bandwidth, which may have an impact on the measured performance. For instance, a contact center system that has limited memory may not be able to properly support a pairing algorithm from a particular provider that requires a significant amount of memory, but this would not be readily apparent from the performance of the pairing algorithm due to other confounding factors. Moreover, pairing algorithms from different providers may require communication between different hardware components, such as processors, memory, or storage devices, which may have different faults. In some instances, pairing algorithms from different providers require may similar hardware resources, such as processing power, memory, or communication bandwidth, then they may compete with each other for these resources, which can lead to further variations in performance. The same can also happen with other resources in the contact center system such as agents and contacts.

In some embodiments, a contact center system may switch (or "cycle") among at least two different pairing algorithms (e.g., between FIFO and PBR; between PBR and BP; among FIFO, PBR, and BP). Additionally, the outcome of each contact-agent interaction may be recorded in memory along with an identification of which pairing algorithm (e.g., FIFO, PBR, or BP) had been used to assign that particular contact-agent pair. By tracking which interactions produced which results, a measuring module communicatively coupled with the contact center system may measure the performance attributable to at least the first algorithm (e.g., FIFO) and the performance attributable to the second algorithm (e.g., PBR). In this way, the relative performance of one algorithm may be measured against the other. The contact center system may, over many switches between different pairing algorithms, more reliably attribute performance difference to one algorithm or the other.

Several comparative measuring techniques may achieve precisely measurable performance difference by reducing noise from confounding variables and eliminating bias in favor of one pairing algorithm or another. In some embodiments, comparative measuring techniques may use time-based switching ("epoch switching") among at least two pairing algorithms. In other embodiments, comparative measuring techniques may involve switching by randomization or counting ("inline switching") among at least two pairing strategies. In other embodiments, comparative measuring techniques may use a hybrid of epoch and inline switching. Epoch, inline and hybrid switching are discussed in turn below.

It should be appreciated that the term "switching" when used with reference to at least two pairing algorithms herein, has the meaning of changing between the at least two pairing algorithms. The terminology "epoch", "inline" and "hybrid" describe the nature of the change that occurs. The term "switching" in this context should not be confused with the switching amongst contacts and agents performed by the contact center system switch.

### Epoch switching

In some embodiments, the contact center system (e.g., contact center system 100A of FIG. 1A, contact center system 100B of FIG. 1B, contact center system 250 of FIG. 2A, contact center system as a service 270 in FIG. 2B-2D) may use epoch switching to improve the accuracy of comparative measurements of pairing algorithms.

In epoch switching, as explained in detail below, the switching frequency (or period duration) can affect the accuracy of the comparative measurements. For example, assume the period is two years, switching each year between two different algorithms. In this case, the contact center system may use a first pairing algorithm (e.g., FIFO) in the first year at a 30% average load at the contact center system and a second pairing algorithm (e.g. PBR) in the second year at a 20% average load at the contact center system, and measure the gain as 50%. However, this period is too large to eliminate or otherwise control for expected variability in performance. Even shorter periods such as two months, switching between pairing algorithms each month, may be susceptible to similar effects. For example, if a first pairing algorithm is used in November, and a second pairing algorithm is used December, some performance improvement in December may be attributable to new contact center system hardware being implemented in December rather than the PBR itself.

In some embodiments, to reduce or minimize the effects of performance variability over time, the period may be much shorter. In such embodiments, the switching period may be less than a day For example, the switching period may be 1, 2, 3, 4, 5, 6, 7, 8, 9, 10, 11, 12, 13, 14, 15, 16, 17, 18, 19, 20, 21, 22, or 23 hour(s). In other embodiments, the switching period may be less than an hour. For example, the switching period may be 20, 25, 30, 35, 40, 45, 50, or 55 minutes. In further embodiments, the switching period may be less than twenty minutes. For example, the switching period may be 1, 2, 3, 4, 5, 6, 7, 8, 9, 10, 11, 12, 13, 14, 15, 16, 17, 18, or 19 minute(s).

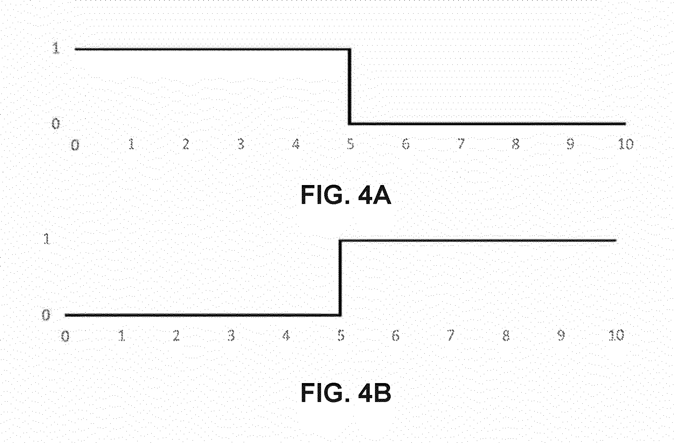

FIG. 4A shows an example switching period of ten units (e.g., 10 minutes); however, it should be appreciated that any of the switching periods listed above may be used. In FIG. 4A, the horizontal axis represents time, and the vertical axis represents whether a first pairing algorithm ("1") or a second pairing algorithm ("0") is used. For the first five minutes (e.g., 9:00-9:05 AM), the first pairing algorithm (e.g., BP) may be used. After five minutes, the contact center system may switch to the second pairing algorithm (e.g., FIFO or PBR) for the remaining five minutes of the ten-minute period (9:05-9:10 AM). At 9:10 AM, the second period may begin, switching back to the first pairing algorithm (not shown in FIG. 4A). If the period is 30 minutes (i.e., each unit of time in FIG. 4A is equal to three minutes), the first pairing algorithm may be used for the first 15 minutes, and the second pairing algorithm may be used for the second 15 minutes.

With short, intra-hour periods (10 minutes, 20 minutes, 30 minutes, etc.), the comparative measuring is less likely to be biased in favor of one pairing algorithm or another based on long-term variability (e.g., year-over-year trends, month-to-month variation). However, other factors of performance variability may persist. For example, if the contact center system always applies the period shown in FIG. 4A when it becomes available each day (e.g., in the morning), the contact center system will always use the first algorithm (e.g. BP) for the first five minutes. As explained above, the contacts who arrive or are queued at a contact center system the moment it becomes available to pair the contacts with agents may be more in number than the contacts that arrive subsequently. Consequently, the comparative measuring may be biased in favor of the pairing algorithm used when the contact center system becomes available (e.g., 9:00 AM) each day, depending on the nature of the pairing algorithm. For example, BP algorithms perform most effectively when there is a large choice of agents and contacts to select from, as there is when the contact center system becomes available. For other pairing algorithms, the comparative measuring may be biased against the pairing algorithm used when the contact center system becomes available each day, depending on the nature of the pairing algorithm.

In some embodiments, to reduce or minimize the effects of performance variability over even short periods of time, the order in which pairing algorithms are used within each period may change. For example, as shown in FIG. 4B, the order in which pairing algorithms are used has been reversed from the order shown in FIG. 4A. Specifically, the contact center system may start with the second pairing algorithm (e.g., FIFO or PBR) for the first five minutes, then switch to the first pairing algorithm (BP) for the following five minutes.

In some embodiments, to help ensure accuracy of the comparative measurements, the switching schedule may be established and published or otherwise shared with contact center system, or other users such as the third-party provider, ahead of time. In some embodiments, the contact center system or any third-party providers may be given direct, real-time control over the switching schedule, such as using a computer program interface to control the cycle duration and the ordering of pairing algorithms.

Embodiments of the present disclosure may use any of a variety of techniques for varying the order in which the pairing algorithms are used within each period. For example, the contact center system may alternate each hour (or each day or each month) between starting with the first ordering shown in FIG. 4A and starting with the second ordering shown in FIG. 4B. In other embodiments, each period may randomly select an ordering (e.g., approximately 50% of the periods in a given day used the ordering shown in FIG. 4A, and approximately 50% of the periods in a given day use the ordering shown in FIG. 4B, with a uniform and random distribution of orderings among the periods).

In the examples of FIGS. 4A and 4B, each pairing algorithm is used for the same amount of time within each period (e.g., five minutes each). In these examples, the "duty cycle" is 50%. However, notwithstanding other variables affecting performance, some pairing algorithms may generally perform better than others. Consequently, a contact center system may use one pairing algorithm for a greater proportion of time than another pairing algorithm-so that more pairings are made using the higher-performing pairing algorithm. Thus, the contact center system may use a higher duty cycle representing more time (or proportion of contacts) paired using the higher-performing pairing algorithm. For example, the duty cycle may be greater than 60%, 70%, 80%, or 90%. For instance, the duty cycle may be 55%, 60%, 65%, 70%, 75%, 80%, 85%, 90%, or 96%.

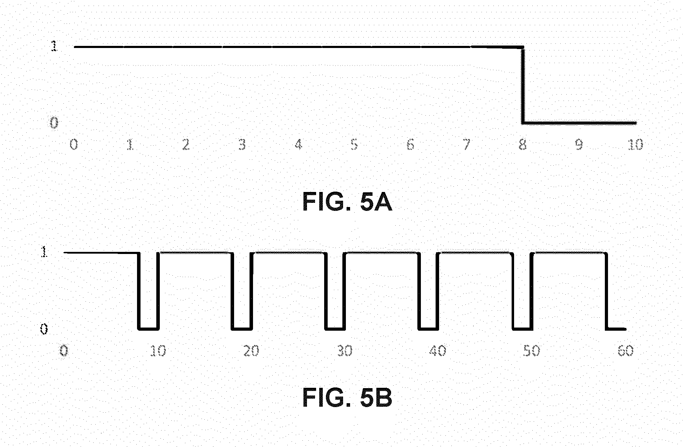

FIG. 5A shows an example of a ten-minute period with an 80% duty cycle. The horizontal axis represents time, and the vertical axis represents whether a first pairing algorithm ("1") or a second pairing algorithm ("0") is used. For the first eight minutes (e.g., 9:00-9:08 AM), the first pairing algorithm (e.g., BP) may be used. After the first eight minutes, the contact center system may switch to the second pairing algorithm (e.g., FIFO) for the remaining two minutes of the period (9:08-9:10) before switching back to the first pairing algorithm again (not shown). If, for another example, a thirty-minute period is used, the first pairing algorithm may be used for the first twenty-four minutes (e.g., 9:00-9:24 AM), and the second pairing algorithm may be used for the next six minutes (e.g., 9:24-9:30 AM).

As shown in FIG. 5B, the contact center system may proceed through six ten-minute periods over the course of an hour. Again, the horizontal axis represents time, and the vertical axis represents whether a first pairing algorithm ("1") or a second pairing algorithm ("0") is used. In this example, each ten-minute period has an 80% duty cycle favoring the first pairing algorithm, and the ordering within each period starts with the favored first pairing algorithm. Over the hour, the contact center system may switch pairing algorithms twelve times (e.g., at 9:08, 9:10, 9:18, 9:20, 9:28, 9:30, 9:38, 9:40, 9:48, 9:50, 9:58, and 10:00). Within the hour, the first pairing algorithm was used a total of 80% of the time (48 minutes), and the second pairing algorithm was used the other 20% of the time (12 minutes). For a thirty-minute period with an 80% duty cycle (not shown), over the hour, the contact center system may switch pairing algorithms four times (e.g., at 9:24, 9:30, 9:48, and 10:00), and the total remains 48 minutes using the first pairing algorithm and 12 minutes using the second pairing algorithm.

In some embodiments, as in the example of FIG. 5B, the order in which the pairing algorithms are used within a period may change (not shown), even as the duty cycle (percentage of time within the period that a given algorithm is used) remains the same. Nevertheless, for periods which are factors or multiples of 60 minutes (e.g., 10 minutes, 30 minutes), periods may always or frequently align to boundaries at the top of each hour (e.g., new periods begin at 9:00, 10:00, 11:00, etc.), regardless of the ordering of pairing algorithms to be used for the period at the beginning of a given hour.

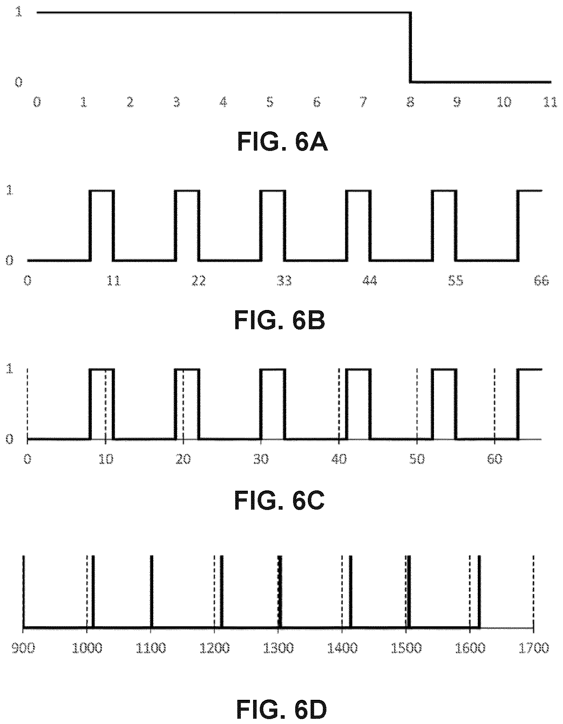

In some embodiments, as explained below with references to FIGS. 6A-6D, choosing a period that is a prime number of minutes, such as 3, 5, 7, 11, 13, 17, 19, 23, 29, 31, 37, 41, 43, 47, 53 or 59 minutes, or not a factor of 60-minute, such as 7, 8, 9, 11, 13, 16, 17, 18, 19, 21, 22, 23, 24, 25, 26, 27, 28, 29, 31, 32, 33, 34, 35, 36, 37, 38, 39, 40, 41, 42, 43, 44, 45, 46, 47, 48, 49, 50, 51, 52, 53, 54, 55, 56, 57, 58, or 59 minutes, or both, such as 7, 11, 13, 17, 19, 23, 29, 31, 37, 41, 43, 47, 53 or 59 minutes, increases the number of periods required before a particular pattern repeats. Instead, the alignment of periods may drift through hours, days, weeks, etc. before repeating. The duration of a cycle through each pairing algorithm may align infrequently with to the hours of a day, days of a week, weeks of a month or year, etc. In FIGS. 6A-6D, the horizontal axis represents time, and the vertical axis represents whether a first pairing algorithm ("1") or a second pairing algorithm ("0") is used.

FIG. 6A shows an example of a period of 11 minutes and approximately a 73% duty cycle, with the first eight minutes using a first pairing algorithm and the last three minutes using a second pairing algorithm; however, it should be appreciated that any of the listed periods mentioned above that are not prime numbers of minutes and/or not factors of 60 minutes may be used. FIG. 6B illustrates six consecutive cycles. For example, at the top of the first hour on the first day of the week (e.g., Monday at 9:00 AM), the first period may begin, aligned on the top of the hour, the first hour of the day, and the first day of the week. The first period may last from 9:00-9:11 AM, followed by the second period from 9:11-9:22 AM, and so on, as illustrated in FIG. 6B and Table I below. The sixth period begins at 9:55 and ends at 10:06. The top of the second hour (10:00 AM), occurs during the sixth cycle and is not aligned with the beginning of a period. FIG. 6C shows the same six periods as FIG. 6B, with the horizontal axis marking time on ten-minute intervals to illustrate the intentional intra-hour misalignment further.

**Table I**

| Period # | Time Period Begins |
|---|---|
| 1 | 9:00 |
| 2 | 9:11 |
| 3 | 9:22 |
| 4 | 9:33 |
| 5 | 9:44 |
| 6 | 9:55 |
| 7 | 10:06 |

As shown in FIG. 6D and Table II below, the alignment of periods with respect to the nearest hour continues to drift throughout a day, using an example of a contact center system that is able to pair contacts and agents from 9:00 AM to 5:00 PM (9:00-17:00 hours). The first period of the first hour (9:00 AM) is aligned with the top of the hour (9:00 AM). The first period of the second hour (10:00 AM) begins at 10:06 AM, six minutes after the top of the hour. The first period of the third hour (11:00 AM) begins at 11:01 AM, one minute after the top of the hour. It would take 60 periods over 11 hours for the first period of an hour to once again align with the top of the hour. As shown in Table II, a contact center system that is able to pair contacts and agents from 9-5 would not be aligned on the hour again until 12:00 PM the following day (1.375 eight-hour days later).

**Table II**

| Hour | Time of First Period of Hour |
|---|---|
| 1 | 9:00 |
| 2 | 10:06 |
| 3 | 11:01 |
| 4 | 12:07 |
| 5 | 13:02 |
| 6 | 14:08 |
| 7 | 15:03 |
| 8 | 16:09 |

| Next Day | |
|---|---|
| 9 | 9:04 |
| 10 | 10:10 |
| 11 | 11:05 |
| 12 | 12:00 |

Table III below shows the sequence of days and times at which a new period begins at the top of the hour. For example, assuming five-day weeks Monday-Friday with eight-hour days from 9-5, the sequence would proceed from aligning on Monday at 9:00 AM, to Tuesday at 12:00 PM, to Wednesday at 3:00 PM (15:00), to Friday at 10:00 AM, and so on. As shown in Table III, it would take 2.2 weeks for a contact center system that is able to pair contacts and agents five days per week for eight hours per day to be aligned at the beginning of a day (e.g., Tuesday at 9:00 AM over two weeks later).

**Table III**

| Day | Next Time Period Starts at Top of Hour |
|---|---|
| Monday | 9:00 |
| Tuesday | 12:00 |
| Wednesday | 15:00 |
| Friday | 10:00 |

| Next Week | |
|---|---|
| Monday | 13:00 |
| Tuesday | 16:00 |
| Thursday | 11:00 |
| Friday | 14:00 |

| Next Week | |
|---|---|
| Tuesday | 9:00 |

Table IV below shows the sequence of days of the week on which a new period begins at the top of that day of the week. In this example, assuming five-day weeks Monday-Friday with eight-hour days, the sequence would proceed from aligning with the beginning of the day on Monday in week 1, Tuesday in week 3, Wednesday in week 5, and so on. As shown in Table IV, it would take 11 weeks for this contact center system to be aligned at the beginning of a Monday again.

**Table IV**

| Week | Next Day Cycle Starts at Top of Day |
|---|---|
| 1 | Monday |
| 3 | Tuesday |
| 5 | Wednesday |
| 7 | Thursday |
| 9 | Friday |
| 12 | Monday |

Thus, as FIGS. 6A-6D and Tables I-IV have illustrated, selecting a period that is not a prime number of minutes and/or not a factor of 60 minutes for an hour/day/week/etc. boundary is effective for enabling the alignment of periods to "drift" through natural time boundaries over weeks/months/years. Because the alignment of periods drifts, it is less likely for a pattern to arise that confounds measuring relative performance of multiple pairing algorithms. In some embodiments, selection of a period that is not a prime number of minutes and/or not a factor of 60 minutes may be combined with other techniques for reducing the effect of confounding variables on performance measurement, such as randomizing or otherwise changing the ordering of pairing algorithms within each period or a set of periods.

In some embodiments, the contact center system may determine which pairing algorithm to use based on a timestamp indicative of the time at which a pairing request is made for a contact. For instance, when the contact is routed to the PBX, the PBX may make a pairing request to the ACD at a particular time and record the time using a timestamp. Alternatively, the ACD may assign a timestamp when it received the pairing request from the PBX. The timestamp may then be used to determine which pairing algorithm is to be used. For example, assume a contact center system is comparatively measuring a first pairing algorithm against a second pairing algorithm using the example of FIG. 4A (ten-minute periods with a 50% duty cycle, starting with the first pairing algorithm in the first half and the second pairing algorithm in the second half). If the contact center system (e.g., the PBX) requests a pairing at 9:04 AM, the timestamp of the pairing request falls in the first half of a period, so the first pairing algorithm is used. If the contact center system (e.g., the PBX) requests a pairing at 9:06 AM, the timestamp of the pairing request falls in the second half of the period, so the second pairing algorithm is used.

In other embodiments, the contact center system may determine which pairing algorithm to use based on a timestamp that is indicative of the time at which a contact arrives at the contact center system. The time at which the contact arrives at the contact center system is determine by when the connection of the contact to the contact center system commences. For instance, if the contact is a caller, then the timestamp may be the time at which the call commenced. For example, assume a contact center system is comparatively measuring a first pairing algorithm against second pairing algorithm, as in the preceding example. If the first contact arrives at 9:04 AM, the timestamp of arrival falls in the first half of a period, so the first pairing algorithm may be used for the contact. Even if the first contact must wait in a queue for two minutes, and the pairing is not requested until 9:06 AM, the pairing may still be made using the first pairing algorithm. Moreover, if a second contact arrives at 9:05 AM, while the first contact is still waiting in queue, the second contact may be designated for the second pairing algorithm. Consequently, at 9:06 AM, contact choice under the first pairing algorithm may be limited to only the contacts in queue who arrived during the first portion of the period and, in this example, only the first contact to arrive would be available.

In embodiments for epoch-based switching in which a contact arrives on a boundary between periods, or on a boundary between switching pairing algorithms within a period, the system may have predetermined rules for handling such a contact. For example, the boundary may be defined as "at or before" a particular time, or "on or after" a particular time, etc. For example, if a period is defined to be associated with pairing algorithm "A" from 9:00-9:08 and pairing algorithm B from 9:08-9:10, the rule may dictate that the contact must arrive on or after 9:00 but before 9:08 (e.g., 9:07:59) to be considered within the first part of the period. Alternatively, it may mean that a contact must arrive after 9:00 but at or before 9:08.00 to be considered within the first part of the period. In such examples, the particular time may be defined to the same granularity as the timestamps of the contact center system. For instance, in a contact center system that has timestamps defined as hh:mm:ss, then the particular time may use the same format. Likewise, in a contact center system that has timestamps defined as hh:mm:ss.SSS, where "SSS" represents the number of milliseconds.

### Inline switching

In some embodiments, the contact center system (e.g., contact center system 100A of FIG. 1A, contact center system 100B of FIG. 1B, contact center system 250 of FIG. 2A, contact center system as a service 270 in FIG. 2B-2D) may use inline switching to improve the accuracy of comparative measurements of pairing algorithms.

In inline switching techniques, pairing algorithms may be selected on a contact-by-contact basis. For example, assume that a particular percentage of contacts arriving at a contact center system are to be paired using a first pairing algorithm (e.g., FIFO), and the remaining percentage of contacts are to be paired using a second pairing algorithm (e.g., BP). For instance, 50% of contacts arriving at the contact center system are assigned using the first pairing algorithm whilst the remaining 50% of the contacts arriving at the contact center system are assigned using the second pairing algorithm.

In some embodiments, each contact may be randomly designated for pairing using one pairing algorithm or the other with a predetermined probability (e.g., 50% probability for each pairing algorithm). In other embodiments, contacts may be sequentially designated to a first pairing algorithm until a predetermined number of contacts have been designated to the first pairing algorithm. After the predetermined number of contacts have been designated to the first pairing algorithm, a second predetermined number of contacts may be designated to the second pairing algorithm. The first predetermined number of contacts may be 1, 2, 3, 4, 5, 6, 7, 8, 9, 10, 11, 12, 13, 14, 15, 16, 17, 18, 19 or 20 contacts. Similarly, the second predetermined number of contacts may be 1, 2, 3, 4, 5, 6, 7, 8, 9, 10, 11, 12, 13, 14, 15, 16, 17, 18, 19 or 20 contacts. The first predetermined number of contacts may be the same or different to the second predetermined number of contacts. For example, the first five (or ten, or twenty, etc.) contacts may be designated for a first pairing algorithm (e.g., FIFO), and the next five (or ten, or twenty, etc.) may be designated for a second pairing algorithm (e.g. BP). Other percentages and proportions may also be used, such as 60% (or 80%, etc.) paired with a second pairing algorithm and the other 40% (or 20%, etc.) paired with a first pairing algorithm, and the like.

From time to time, a contact may return to a contact center system (e.g., call back) multiple times. In particular, some contacts may require multiple connections (e.g., multiple interactions with one or more contact center system agents). In these cases, it may be desirable to ensure that a contact is paired using the same pairing algorithm each time the contact returns to the contact center system. If the same pairing algorithm is used for each individual connection, then the comparative measuring technique will ensure that this single pairing algorithm is associated with the final connection (e.g., resolution) of the multiple contact-agent interactions. In other situations, it may be desirable to switch pairing algorithms each time a contact returns to the contact center system, so that each pairing algorithm may have an equal chance to be used during the multiple interactions with one or more contact center system agents. In yet other situations, it may be desirable to select pairing algorithms without regard to whether a contact has connected to the contact center system multiple times.

In some embodiments, the determination of whether a repeat contact should be designated for the same (or different) pairing algorithm may depend on other factors. For example, there may be a time limit, such that the contact must return to the contact center within a specified time period for prior pairing algorithms to be considered (e.g., within an hour, within a day, within a week). In other embodiments, the pairing algorithm used in the first interaction may be considered regardless of how much time has passed since the first interaction.

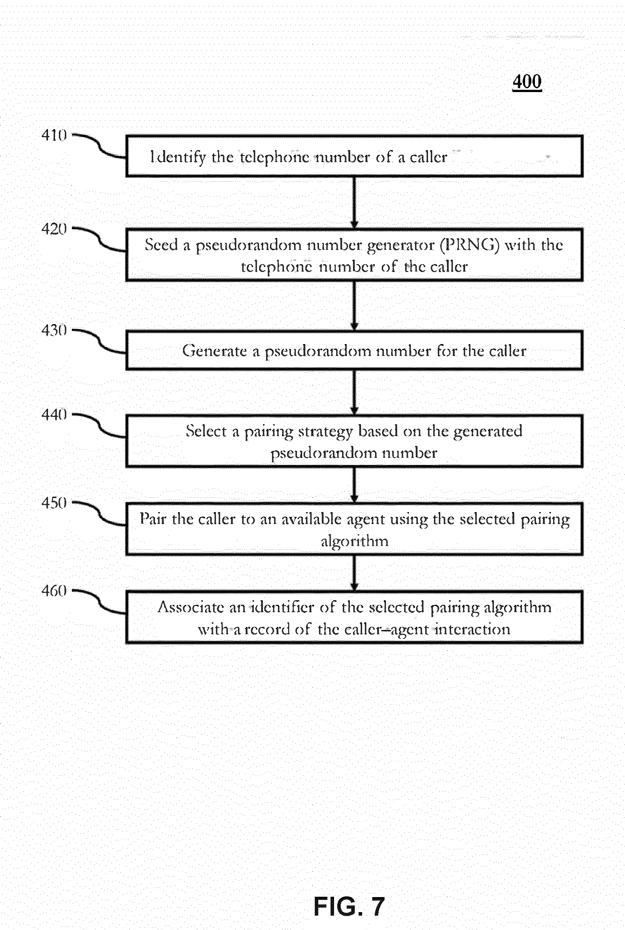

One approach to considering prior pairing for inline comparative measuring techniques is depicted in FIG. 7. FIG. 7 shows a flow diagram of comparative measuring method 400 according to embodiments of the present disclosure. Unless otherwise stated, the blocks of flow diagram 400 are performed by a processor (e.g. processor 1255 of FIG. 3) in or communicatively coupled to the contact center system (e.g. contact center system 100A of FIG. 1A, contact center system 100B of FIG. 1B, contact center system 250 of FIG. 2A, contact center system as a service 270 in FIG. 2B-2D). Comparative measuring method 400 may begin at block 410.

At block 410, an identifier of a contact (e.g., caller), i.e., a contact identifier, may be identified or otherwise determined by the processor. In this example, the contact is a caller, and the caller's telephone number may be identified from the incoming call. This example assumes that a caller uses the same telephone number for each call. In other embodiments, other identifiers of the contact may be used instead or in addition. The contact identifier may be one or more of: a telephone number, an Internet Protocol (IP) address, a Media Access Control (MAC) address, a Universally Unique Identifier (UUID), and a serial number of the contact's device. Back to the example at FIG. 7, having identified the caller's telephone number (or other contact identifier), comparative measuring method 400 may proceed to block 420.

At block 420, a pseudorandom number generator (PRNG) algorithm may be seeded with the identifier of the contact, which in this example is the telephone number. In this context, "seeding" is a reference to the input to the PRNG algorithm. Having seeded the PRNG algorithm with the telephone number (or other contact identifier), comparative measuring method 400 may proceed to block 430.

At block 430, a pseudorandom number may be generated for the contact using the seeded PRNG algorithm. Because the seed will be the same for a given contact each time the contact returns to the contact center system, the generated pseudorandom number will also be the same each time for the given contact. This is because PRNG algorithms do not generate a completely random number, but a random number based on the input used to seed the PRNG algorithm, meaning that if the same input is used, the same pseudorandom number is generated. Having generated the pseudorandom number, comparative measuring method 400 may proceed to block 440.

At block 440, a pairing algorithm (e.g., BP or FIFO) may be selected for the given contact based on the generated pseudorandom number. For example, if 50% of contacts are to be paired using BP, and the other 50% are to be paired using FIFO, the PRNG may be configured to generate either a 1 or a 0 as the random number. If the generated pseudorandom number is a 1, the contact may be designated for the BP pairing algorithm, and if the generated pseudorandom number is 0, the contact may be designated for the FIFO pairing algorithm, or vice versa. In another example, if 80% of the contacts are to be paired using BP, and the other 20% are to be paired using FIFO, the PRNG may be configured to generate one of a 0, 1, 2, 3, or 4 as the pseudorandom number. If the generated pseudorandom number is 1, 2, 3, 4, the contact may be designated for the BP pairing algorithm, and if the generated pseudorandom number if 0, the contact may be designated for the FIFO pairing algorithm. In general, the generated pseudorandom numbers and the pairing algorithms to be used for each pseudorandom number are predetermined based on the percentage that each of the pairing algorithms is to be used for pairing the contact.

In this way, the contact will always be paired using the same pairing algorithm each time the contact connects to the contact center system. The PRNG will be seeded with the same seed (e.g., the contact's telephone number) each time, so the PRNG will generate the same pseudorandom number for the contact each time. Thus, comparative measuring method 400 may select the same pairing algorithm for the contact each time. In this way, it is possible to account for prior pairings without querying a database or other storage means to determine whether or how a contact has been previously paired. This is advantageous because it means that it is not necessary to keep a database of prior pairing in the event that a contact reconnects to the contact center system. Moreover, not having to query said database each time a contact arrives means that contacts may be paired and routed more quickly. In this way, comparative measuring method 400 is stateless with respect to whether or how a contact has been previously paired. Having selected a pairing algorithm for the contact, comparative measuring method 400 may proceed to block 450.

At block 450, the contact may be paired to an available agent using the selected pairing algorithm. When a contact has been paired with an available agent, components of the contact center system (e.g., switches, routers) may connect the contact to the agent. Further detail about how the connection is effectuated is described with respect to FIGS. 2A-2D. The contact center system (or measuring module of the third party provider) may record the performance metrics (e.g. the technical metrics described above). Such a record may be stored in a CRM (e.g. CRM 1242 of FIG. 3). The contact center system (or measuring module of the third party provider) may also record information about the interaction between the contact and agent, such as the time and duration of the interaction (e.g. the call), identifier of the contact (e.g. the telephone number), the agent identifier, and other data. The time and duration of the interaction may be determined using the timestamp at which the agent hardware connected to the contact, and the timestamp at which the agent hardware disconnected from the contact. At this point, comparative measuring method may proceed to block 460.

At block 460, an identifier of the selected pairing algorithm may be associated with the record created at block 450. In some embodiments, this may happen simultaneously with the creation of the record, i.e. the record stored in a CRM (e.g. CRM 1242 of FIG. 3). For example, when the contact center system records the time and duration of an interaction (e.g. a call), it may also record whether the call had been paired using a first pairing algorithm (e.g. BP) or a second pairing algorithm (e.g. FIFO). In other embodiments, another module (e.g. the measuring module of a third party provider) may create a separate record of the pairing. This module may record the time of the pairing, the contact and agent identifiers, the pairing algorithm used (e.g., BP or FIFO), and any other data. At some later time, the pairing records may be used to determine the performance of the respective pairing algorithms. Following block 460, comparative measuring method 400 may end. In some embodiments, comparative measuring method 400 may return to block 410, waiting for another contact to arrive.

### Hybrid switching

In some embodiments, the contact center system (e.g. contact center system 100A of FIG. 1A, contact center system 100B of FIG. 1B, contact center system 250 of FIG. 2A, contact center system as a service 270 in FIG. 2B-2D) may use both epoch switching and inline switching to improve the accuracy of comparative measurements of pairing algorithms. This type of switching is referred to herein as "hybrid" or "hybrid inline-epoch" switching.

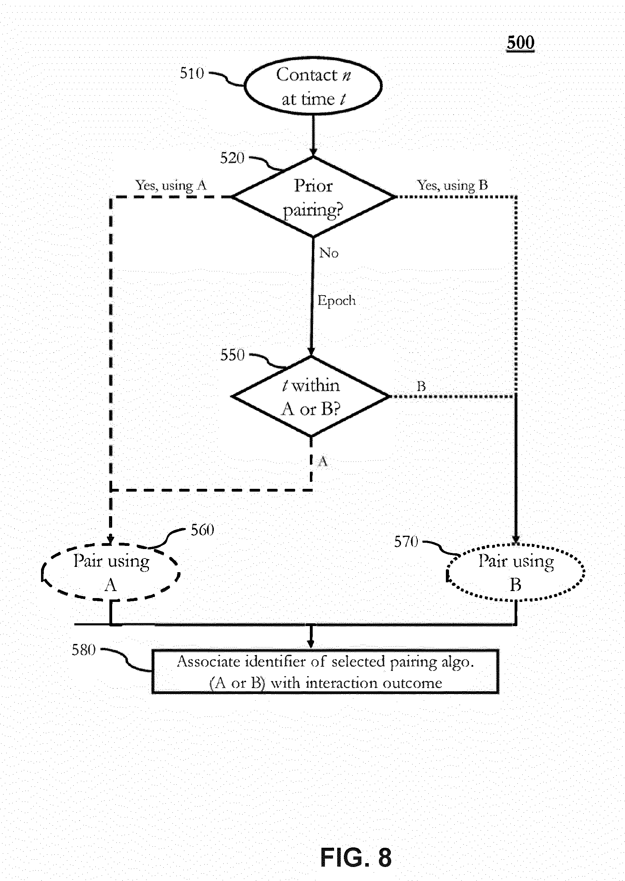

FIG. 8 shows a flow diagram of comparative measuring method 500 that uses hybrid switching according to embodiments of the present disclosure. Like comparative measuring method 400, comparative measuring method 500 also considers prior pairing, but uses a different approach that is combined with epoch switching. Comparative measuring method 500 may begin at block 510.

At block 510, a contact (e.g., "contact n") arrives at the contact center system at a particular time t. The contact center system may determine a timestamp indicative of the particular time t at which the contact arrived. As discussed previously, the time at which the contact arrives at the contact center system is determine by the contact center system by when the connection of the contact to the contact center system commences (e.g. the call begins). Comparative measuring method 500 may proceed to block 520.

At block 520, the contact center system may determine whether the contact has been previously paired, i.e., whether this contact is reconnecting to the contact center system for a subsequent interaction. This decision may be made using a variety of techniques. For example, the contact center system may query the contact's records using a contact identifier (e.g., telephone number or other identifier, as previously discussed) in a database to determine whether and when the contact had previously contacted the contact center system. The database may be maintained and stored by the contact center system, for example in a CRM (e.g., CRM 1242 of FIG. 3). Once the contact center system has determined that the contact had been previously paired, in some embodiments the contact center system identifies whether and how the prior pairing should influence the current pairing.

In some embodiments, the contact center system may preferably pair a contact using the same pairing algorithm every time the contact reconnects to the contact center system. Thus, if contact n was previously paired using pairing algorithm "A" (e.g., BP), comparative measuring method 500 may proceed to block 560 for subsequent pairing using pairing algorithm A again. Similarly, if contact n was previously paired using pairing algorithm "B") (e.g., FIFO), comparative measuring method 500 may proceed to block 570 for subsequent pairing using pairing algorithm B again.

However, if it is determined at block 520 that contact n has not been previously paired (or, in some embodiments, any prior pairing should not influence the current pairing), comparative measuring method 500 may proceed to using epoch switching at block 550.

At block 550, epoch switching may be used to determine whether to pair the contact using pairing algorithm A or B. In particular, time t may be used to determine which pairing algorithm to use for contact n. In this example, the timestamp indicative of arrival time t may be used. If contact n arrived during a time period when the contact center system is pairing using algorithm A, comparative measuring method 500 may proceed to block 560 for subsequent pairing using algorithm A. Similarly, if contact n arrived during a time period when the contact center system is pairing using algorithm B, comparative measuring method 500 may proceed to block 570 for subsequent pairing using algorithm B. Alternatively, at block 550, one of the epoch switching embodiments discussed with respect to FIGS. 4A-4B, 5A-5B and 6A-6D may be used.

At blocks 560 and 570, contacts may be paired to available agents using pairing algorithms A or B, respectively. Once paired, the contact may be routed or otherwise connected to the available agent within the contact center system, as discussed with respect to FIGS 1A-1B, 2A-2D and 3. As described above with respect to comparative measuring method 400 (FIG. 7), a record of the performance metric may be created by the contact center system and/or the comparative measuring module of the third party provider. Comparative measuring method may proceed to block 580.

At block 580, an identifier to the selected pairing algorithm (e.g., A or B) may be associated with the record created at block 560 or 570. As described above with respect to comparative measuring method 400, this association may occur simultaneously with the creation of the interaction record, or it may be matched at a later time with other records created by a measuring module or other module. Following block 580, measuring method 500 may end. In some embodiments, measuring method 500 may return to block 510, waiting for another contact to arrive.

By associating the pairing algorithm with the performance metric as in, for example, comparative measuring methods 400 and 500, the performance associated with each pairing algorithm may be measured (e.g., averaged, accumulated), and the relative performance of each pairing algorithm may be determined (e.g., the relative overall performance difference attributable to pairing using, for example, BP instead of pairing using FIFO). This performance data may be used for a variety of purposes. For example, the data may be used to validate one pairing algorithm over another. For another example, the data may be used to improve the switching between the pairing algorithms. In some embodiments, performance data may be used to improve a BP algorithm by providing feedback for when the BP algorithm is used for pairing (i.e., "BP on") and when it is not (i.e. "BP off" (e.g., FIFO)). The latter is important for a BP algorithm since the pairings performed by BP algorithms impact subsequent contact-agent pairings. Such feedback may be used to automatically enhance the artificial intelligence of the BP algorithm via a feedback control loop or the like. Because the performance difference of one pairing algorithm over another may be measured accurately and fairly, when pairing algorithms are from different providers, the differences in performance data may be attributed to a particular provider.

### Three-way switching

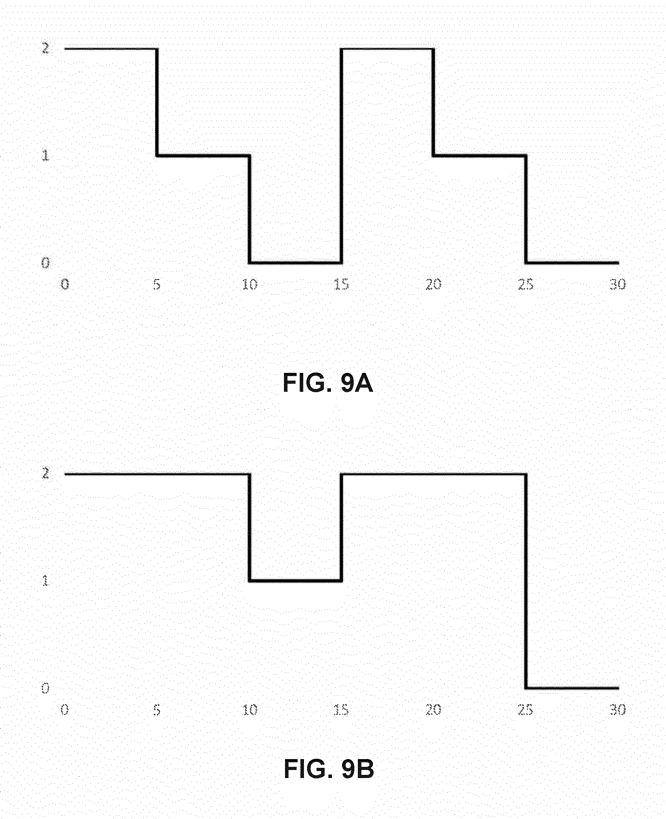

Embodiments of the present disclosure are not limited to comparatively measuring only two pairing algorithms. Rather, comparative measuring may be performed for two or more pairing algorithms. For example, comparative measuring may be performed for three, four, five, six or more pairing algorithms at once. FIGS. 9A and 9B depict examples of switching sequences for three pairing algorithms (e.g., comparatively measuring FIFO, PBR, and BP). In FIGS. 9A and 9B, the horizontal axis represents time, and the vertical axis represents whether a first pairing algorithm ("2"), a second pairing algorithm ("1") or a third pairing algorithm ("0") is used.

In general, epoch switching may be used to switch between more than two pairing algorithms. FIG. 9A shows a schematic representation of a three-way switching sequence according to embodiments of the present disclosure. In this epoch switching example, a period is 15 units of time, and each of the three pairing algorithms is used for one-third of the time (5 units). FIG. 9A shows two complete periods, cycling among pairing algorithms "2", "1", and "0" twice over 30 units of time. For example, from 9:00-9:10 AM, the first pairing algorithm (e.g., FIFO) may be used; from 9:10-9:20 AM, the second pairing algorithm (e.g. PBR) may be used; and from 9:20-9:30 AM, a third pairing algorithm (e.g. BP) may be used. The example pattern of FIFO-PBR-BP repeats in the second period.

FIG. 9B shows a schematic representation of an alternative three-way switching sequence according to embodiments of the present disclosure. In this epoch example, a complete period is 30 time units. A preferred pairing algorithm "2" (e.g., BP) is used two-thirds of the time, and other pairing algorithms "1" and "0" (e.g., FIFO and PBR) are used one-sixth of the time each. In this example, each time algorithm "2" turns off, pairing algorithms "1" and "0" alternately turn on. For example, the pattern may be BP-FIFO-BP-PBR. In addition to the examples of FIGS. 9A and 9B, many other patterns for epoch switching among multiple pairing algorithms are possible.

In some embodiments, contact center system may use a "stabilization period" or other neutral zone. For example, consider a contact center system comparatively measuring a first and second pairing algorithms (e.g., BP and FIFO pairing algorithms). When the system transitions from the first pairing algorithm to the second algorithm (e.g., BP to FIFO or vice versa), e effects of one pairing algorithm may influence the performance of another pairing algorithm. For instance, the FIFO may reduce the choice available to BP and vice versa. To alleviate the impact of this influence in the performance metrics and thus in the comparative measurements of the first and second pairing algorithms, a stabilization period may be added.

One technique for implementing a stabilization period may be to exclude performance metrics and corresponding records for the first portion of contacts after switching pairing algorithms. For example, assume a contact center system is comparatively measuring a first pairing algorithm and a second pairing algorithm (e.g., BP and FIFO) with a 50% duty cycle over 30-minute periods. In the aforementioned embodiments (e.g., FIGS. 4A and 4B), the first pairing algorithm would be used for 15 minutes, followed by the second pairing algorithm for 15 minutes, and all of the performance metrics and records in 30-minute period would be included in the comparative measurements. With a stabilization period, the first pairing algorithm may be used for less time of the 30-minute period, e.g., 10 minutes. After 10 minutes, the system may switch to the second pairing algorithm. However, the first portion of this, e.g., 10 minutes would be considered a stabilization period, and pairings made during this period would be excluded from the data used to comparatively measure the second pairing module. The last 10 minutes of the period may continue pairing using the second pairing module, and these pairings would be included in the comparative measurements.

This pattern is illustrated in FIG. 9A. In this example, instead of depicting switching among three pairing algorithms "2", "1", and "0", the "1" may represent the stabilization period. Pairing algorithm "2" (e.g., BP) may be on for the first five time units. After five time units, the other pairing algorithm (e.g., FIFO) may be used for the remaining ten time units. The next five units ("1") may be excluded as being part of the stabilization period, and the five time units after that ("0") may be included as being part of the comparative measurements.

In some embodiments, the stabilization period may be longer or shorter. For example, the stabilization period may be 1, 2, 3, 4, 5, 6, 7, 8, 9, 10, 11, 12, 13, 14, or 15 minutes. In other embodiments, the stabilization period may be for a particular number of pairings. For instance, the stabilization period may end when 1, 2, 3, 4, 5, 6, 7, 8, 9 or 10 pairings have been made using the switched pairing algorithm. In some embodiments, the stabilization period may be dynamic depending on the number of arriving queueing at the contact center system. When there are more contacts arriving at the contact center system, the stabilization period may be lower than when there are fewer contacts arriving at the contact center system. In some embodiments, a stabilization period may be used in a FIFO-to-BP transition instead of, or in addition to, a BP-to-FIFO transition (or any transition between two different pairing algorithms).

### Switching between providers

In some embodiments, the contact center system (e.g., contact center system 100A of FIG. 1A, contact center system 100B of FIG. 1B, contact center system 250 of FIG. 2A, contact center system as a service 270 in FIG. 2B-2D) may use pairing algorithms from different providers. For example, a first pairing algorithm may be provided by a first provider and a second pairing algorithm may be provided by a second provider. The first and second providers may be a first party provider and a third-party provider (e.g. third party provider 130 of FIG. 1A) respectively. Alternatively, the first and second providers may be a first third-party provider and a second third-party provider.

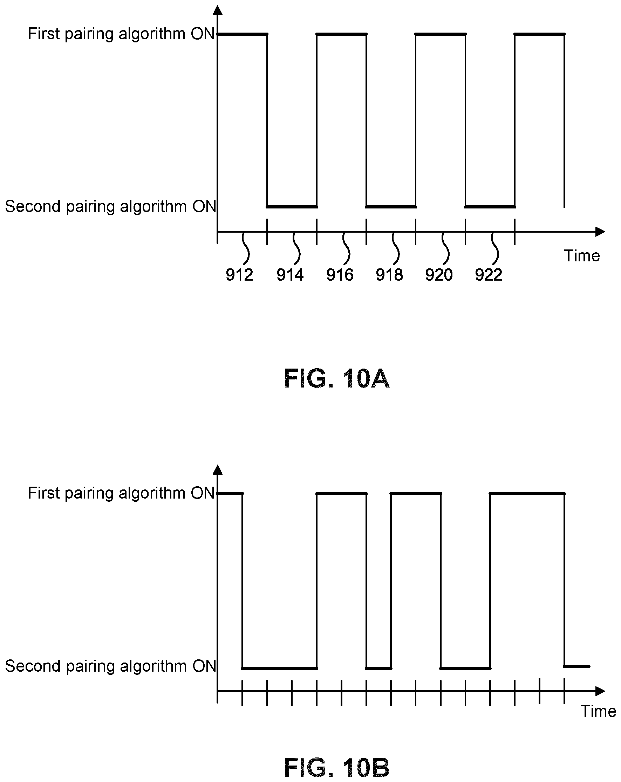

As discussed above, in comparatively measuring the performance of different pairing algorithms, the epoch switching described above may be used. Such epoch switching techniques may also be applied to pairing algorithms from different providers. As shown in FIG. 10A, in case the epoch switching is used for comparatively measuring the performance of first and second pairing algorithms (e.g., from a first provider and a second provider, respectively), the first pairing algorithm (PA) and the second PA are employed alternatively for predefined time intervals. That is, the first PA (i.e. from the first provider) is exclusively used for pairing during a first predefined interval of time (e.g., 10 min), then, at the expiration of the first period of time, the second PA (i.e. from the second provider) is used for pairing exclusively for a second predefined interval of time (e.g., 10 min, 20 min, 30 min) and this cycle repeats as shown in FIG. 10A. More specifically, as shown in FIG. 10A, the first PA (i.e., from the first provider) is exclusively used during time intervals 912, 916, and 920 and the second PA (i.e. from the second provider) is exclusively used during time intervals 914, 918, and 922. In the example shown, time intervals 912, 916, and 920 have the same duration as time intervals 914, 918, and 922, respectively, but this is not a requirement. It should be appreciated that other interval and period durations may be used for epoch switching, as discussed previously.

On the other hand, as shown in FIG. 10B, in case the inline switching is used for comparatively measuring the performance of first PA and second PA, then such inline switching techniques may also be applied to pairing algorithms from different providers. As discussed above, in inline switching the pairing algorithms are employed in a random manner.

For example, for each pairing opportunity, a pseudorandom number generator may be used to generate a pseudo random number (PRN) based on a seed value (e.g., time of day in seconds, the identifier of the contact) and the PRN is used to determine whether to use the first pairing algorithm (i.e. from the first provider) or the second pairing algorithm (i.e. from the second provider) for the given pairing opportunity.

In embodiments where more than two pairing algorithms need to be evaluated (for example, from two or more different providers), a combination of switching techniques (a.k.a., a hybrid switching) may be used to improve the accuracy of the comparative measurements of the different pairing algorithms. For example, epoch switching and inline switching may be used together to measure the performance of different pairing algorithms. Alternatively, two instances of epoch switching may be used. As a further alternative, two instances of inline switching may be used.

However, comparatively measuring pairing algorithms from different providers is more challenging than comparatively measuring two or more pairing algorithms from the same provider. As discussed, for example, pairing algorithms from different providers may require or be optimized for different hardware resources, such as processing power, memory, or communication bandwidth, which may have an impact on the measured performance. For instance, a contact center system that has limited memory may not be able to properly support a pairing algorithm from a particular provider that requires a significant amount of memory, but this would not be readily apparent from the performance of the pairing algorithm due to other confounding factors. Moreover, pairing algorithms from different providers may require communication between different hardware components, such as processors, memory, or storage devices, which may have different faults. In some instances, pairing algorithms from different providers require may similar hardware resources, such as processing power, memory, or communication bandwidth, then they may compete with each other for these resources, which can lead to further variations in performance. The same can also happen with other resources in the contact center system such as agents and contacts.

To improve the accuracy of comparative measurements when the pairing algorithms (PA) are from different providers, the pairing algorithms may be split into two or more PA sets. Each of the PA sets may correspond to a different provider. Each PA to be measured belongs to at least one PA set included in a group of two or more PA sets. For instance, if there are three PAs to be evaluated (a first PA, a second PA, and a third PA), then the first PA (e.g., FIFO) may be a member of PA set 1, the second PA (e.g. 2D BP) may be a member of PA set 2, and the third PA (e.g., 3D BP) may also be a member of PA set 2. In this particular example, the first PA is provided by a first provider (e.g., the contact center system) and the second and third PAs are provided by a second provider (e.g. a third party provider). As shown by this example, a PA set may consist of a single PA or it may comprise two more PAs. Accordingly, as used herein a "PA set" is a single PA or a group of two or more PAs. Moreover, each PA set may correspond to a particular provider (e.g. the contact center system itself, a third party provider). By grouping PAs from each provider in a respective PA set, embodiments of the present invention are able to comparatively measure PAs from different providers in parallel with different PAs from one provider. In this way, confounding factors impacting the performance of a particular provider are more readily discernible and may be mitigated. Moreover, the two or more PA sets may be used so that each provider (e.g., the first party and third party provider, or two different third party providers) can evaluate multiple pairing algorithms at once. By using a set of pairing strategies, it is possible for each provider to test multiple pairing strategies at the same time and see which pairing algorithm provides the best performance measurements.

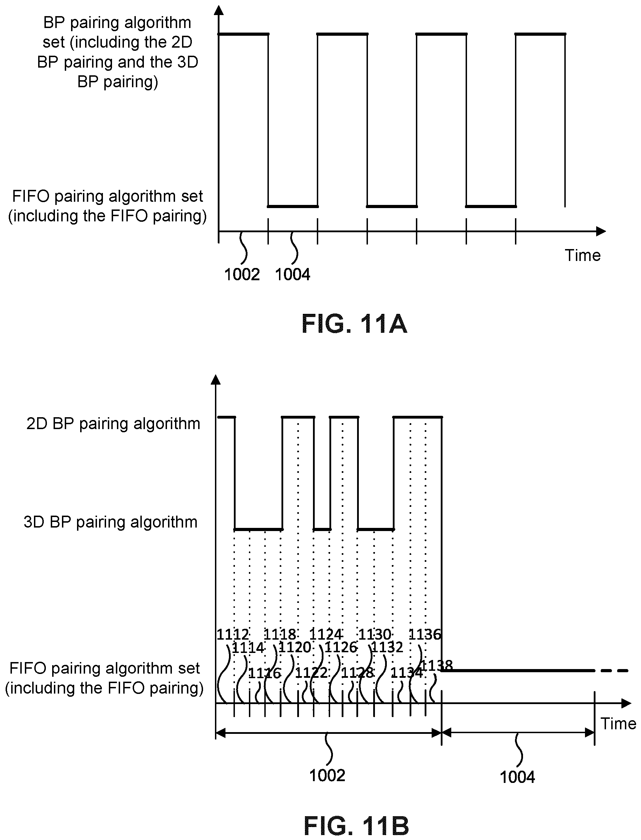

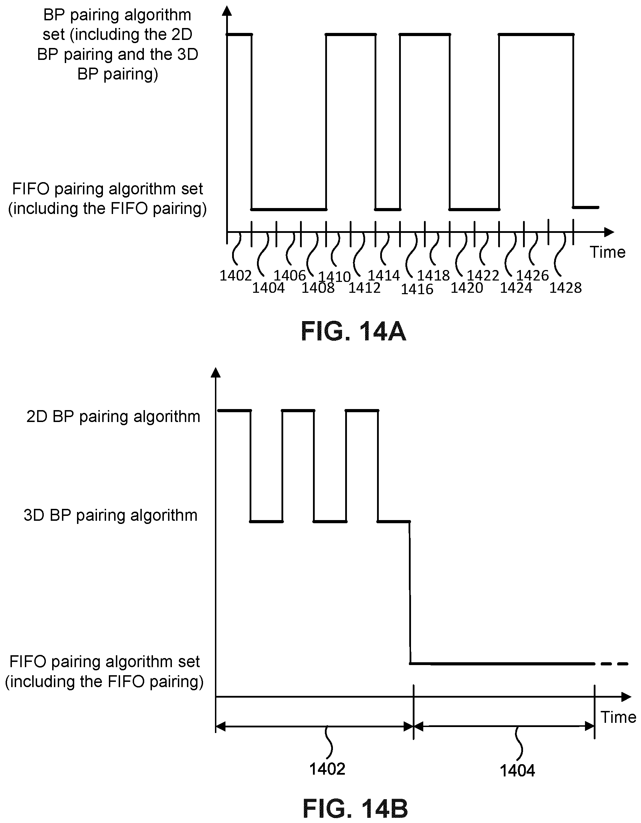

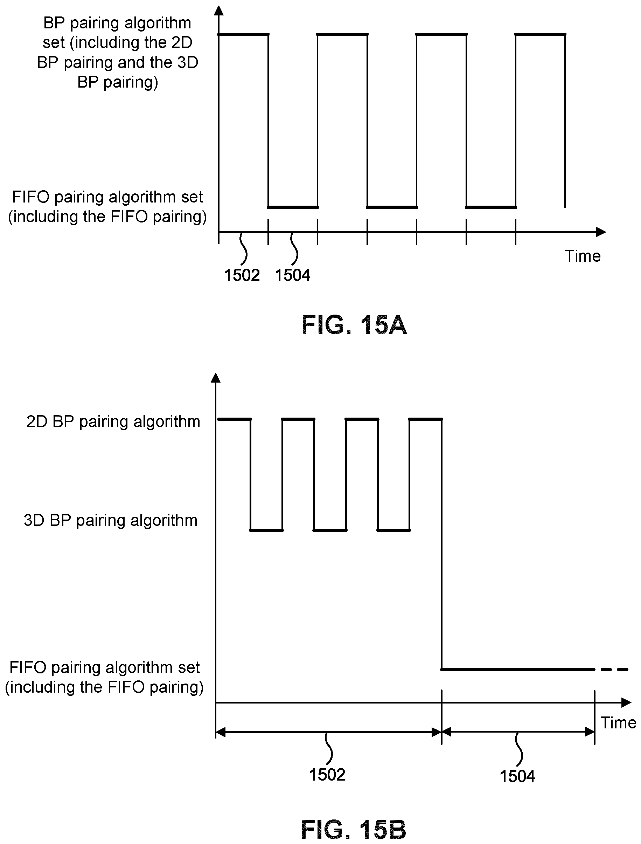

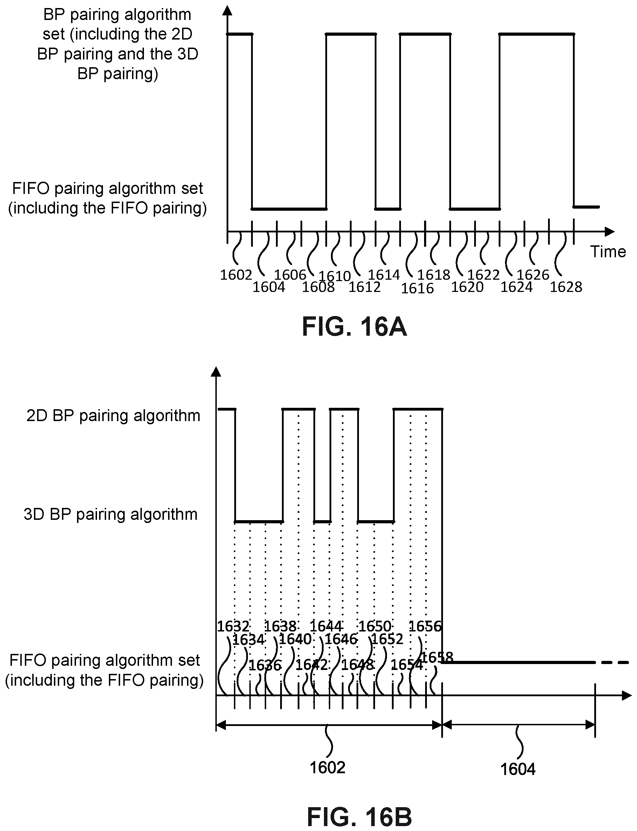

Embodiments of the present invention use hybrid switching both on the two or more PA sets, as well as within the PA sets, to increase the accuracy of the comparative measurements. In particular, a first switching technique (e.g., inline or epoch switching) may be used to determine which of the two or more PA sets to use, whilst a second switching technique (e.g. inline or epoch switching) may be used to determine which PA among a particular set to use. The first and second switching techniques may be the same technique or different. For example, epoch switching may be used to select which PA set to use for any given pairing opportunity, and, if the selected PA set comprises more than one PA, then inline switching may be used to select which one of the PAs included in the selected PA set to use for the given pairing opportunity. This example is explored in more detail in FIG. 11A and 11B. Other example combinations of switching techniques are discussed with respect to FIG. 14A and 14B (inline switching between sets, then epoch switching within a set), FIG. 15A and 15B (epoch switching between sets, then epoch switching within a set), and FIG. 16A and 16B (inline switching between sets, then inline switching within a set).

FIG. 11A provides an illustration of hybrid switching in the case where the performance of three different PAs is being evaluated. In FIG. 11A, the pairing algorithms are the FIFO, the two-dimensional ("2D") BP, and the three-dimensional ("3D") BP. The types of pairing algorithms shown in FIG. 11A are provided for explanation purpose only, and do not limit the embodiments of this disclosure in any way. FIFO, 2D BP and 3D BP may be replaced with a first PA, a second PA and a third PA. The first, second and third PAs may be any of the PAs discussed here.

As shown in FIG. 11A, the 2D BP and the 3D BP are members of a first PA set (i.e., the BP set) and FIFO is a member of the second PA set, and epoch switching is used to select between the first PA set and the second PA set. For example, during time interval 1002, the first PA set (the BP set) is used to do the pairings, and during interval 1004 the second PA set (i.e., FIFO) is used to do the pairings, and this cycle repeats.

Because the BP set includes two different PAs, 2D BP and 3D BP, a second switching technique (e.g., inline switching) may be applied during time interval 1002 to select between 2D BP and 3D BP.

For example, as shown in FIG. 11B, inline switching is used to alternate between the 2D BP and the 3D BP during the time interval 1002. For example, for each time interval 1112-1138, a PRN may be generated and then the PRN is used to select whether 2D BP or 3D BP is employed during that time interval. However, it should be appreciated that other inline switching techniques, as discussed above, may be used.

FIG. 14A illustrates another example of hybrid switching in the case where the performance of three different PAs is being evaluated and inline switching is used to select between the first PA set and the second PA set. For example, for each time interval 1402-1428, a PRN is obtained and then used to select between FIFO and the BP set for that time interval (as shown in FIG. 14A, the FIFO set was choses for 3 consecutive time intervals 1404, 1406, and 1408). As with FIG. 10A and 10B, it should be appreciated that FIFO and the BP set may be substituted with other PA. It should also be appreciated that other inline switching techniques may be used as an alternative to obtaining a PRN, as discussed above.

Because the BP set in this example includes two different PAs, 2D BP and 3D BP, in the example shown in FIG. 14B, epoch switching may be applied during time interval 1402 to select between 2D BP and 3D BP. Any epoch switching technique discussed herein may be used; FIG. 14B shows epoch switching between 2D and 3D BP at constant and equal time intervals.

FIG. 15A illustrates another example of hybrid switching in the case where the performance of three different PAs is being evaluated and epoch switching is used to select between the first PA set and the second PA set. For example, during time interval 1502, the first PA set (the BP set) is employed to do the pairings, and during interval 1504 the second PA set (i.e., FIFO) is employed to do the pairings, and this cycle repeats. As with FIG. 10A, 10B, 14A, and 14B, it should be appreciated that FIFO and the BP set may be substituted with other PA. It should also be appreciated that other epoch switching techniques may be used as an alternative to the epoch technique depicted in FIG. 15A.

Because the BP set includes two different Pas, 2D BP and 3D BP, in the example shown in FIG. 15B, another epoch switching technique is applied during time interval 1502 to select between 2D BP and 3D BP. The epoch switching used for selecting between the first PA set and the second PA set may be same as or different from the epoch switching used for selecting between 2D BP and 3D BP.

FIG. 16A illustrates another example of hybrid switching in the case where the performance of three different PAs is being evaluated and inline switching is used to select between the first PA set and the second PA set. For example, for each time interval 1602-1628, a PRN is obtained and then used to select between FIFO and the BP set for that time interval (as shown in FIG. 16A, the FIFO set was chosen for 3 consecutive time intervals 1604, 1606, and 1608). As with FIG. 10A, 10B, 14A, 14B, 15A and 15B, it should be appreciated that FIFO and the BP set may be substituted with other PA. It should also be appreciated that other epoch switching techniques may be used as an alternative to the inline technique depicted in FIG. 16A.

Because the BP set includes two different PAs, 2D BP and 3D BP, a second switching technique (e.g., the inline switching) may be applied during time interval 1602 to select between 2D BP and 3D BP.

For example, as shown in FIG. 16B, inline switching is used to alternate between the 2D BP and the 3D BP during the time interval 1602. For example, for each time interval 1632-1658, a PRN may be generated and then the PRN is used to select whether 2D BP or 3D BP is employed during that time interval. It should be appreciated that other inline switching techniques, as discussed herein, may be used.

In some embodiments, any PA set may itself contain two or more PA sets. For example, with reference to FIG. 2C, there may be a PA set for each data center 280A and 280B. Within each data center, and thus within each (higher level) PA set, there is two further (lower level) PA sets. For example, for the PA set of data center 280A, the first PA set may include the pairing algorithm from pairing module 274A, and the second PA set may include the algorithm from pairing module 274B, especially when each node 273A and 273B is provided by a different provider. A similar arrangement may apply to data center 280B. In such an embodiment, whenever a PA set containing multiple PA sets is selected, then another selection may take place to select one of the PA sets included in the selected PA set. For example, consider a scenario having a group of two PA sets, PA-set-1 and PA-set-2, and that PA-set-2 itself has as its members two PA sets, PA-set-2.1 and PA-set-2.2, and PA-set-2.2 includes two PA sets, PA-set-2.2.1 and PA-set-2.2.2. In this scenario, if PA-set-2 is initially selected then another selection process must take place to select one of PA-set-2.1 or PA-set 2.2. If PA-set-2.2 is selected, then another selection process must take place to select on of PA-set-2.2.1 or PA-set-2.2.2. Likewise, if PA-set-2.2.2 is selected and this set comprise more than on PA set, then yet another selection process may take place to select one of the members of PA-set-2.2.2. Thus, PA sets can be nested any amount. This allows not only performance issues related to different providers to be uncovered in the comparative measurements of the pairing algorithms, but also from different data centers, for instance.

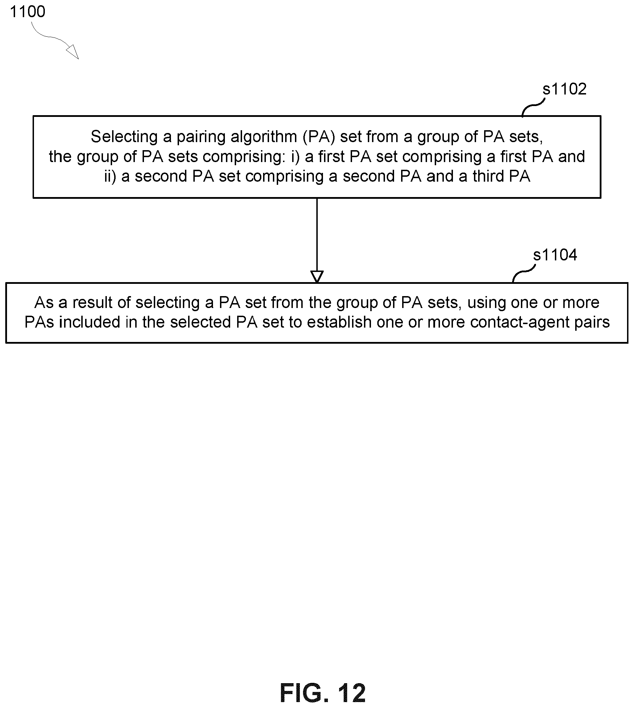

FIG. 12 shows a process 1100 according to some embodiments of the present disclosure. The process 1000 may be implemented in any of the contact center systems discussed herein (e.g., contact center system 100A of FIG. 1A, contact center system 100B of FIG. 1B, contact center system 250 of FIG. 2A, contact center system as a service 270 in FIG. 2B-2D). In particular, the process 1100 may be performed using a pairing module of the contact center system (for example, a pairing module of a particular node, and/or a set of primary and secondary pairing modules). The pairing module may be provided by a third-party provider. The process 1000 may be implemented by at least one computer processor (i.e., the one or more processors 1255) communicatively coupled to and configured to operate in the contact center system. In particular, the pairing module provides CP 1243 (and thus CRI 1244) to be executed by the one or more processors 1255.

Process 1100 may begin with step s1102. Step s1102 comprises selecting a pairing algorithm (PA) set from a group of PA sets, the group of PA sets comprising: i) a first PA set comprising a first PA and ii) a second PA set comprising a second PA and a third PA. Each PA set is defined by one or more of the pairing modules, and/or by the third-party provider who is providing the pairing modules. The PA of the PA sets may be any of the PA discussed herein. Each PA may be implemented by its own pairing module (e.g., pairing module 174 of FIG. 1A and FIG. 1B, or pairing modules 274A, 274B, 274C, 274D of FIG. 2C). Alternatively, the PA in each set may be implemented by respective pairing modules (i.e., one pairing module for the first PA set, and a second pairing module for the second PA set). In some embodiment, the first PA set and the second PA set may be provided to the contact center system by different providers (e.g., contact center system itself, or a third-party provider), as discussed herein. In other embodiments, one pairing module may implement the pairing algorithms from both the third-party provider and the first party provider (e.g., an emulation mode).

Step s1104 comprises, as a result of selecting a PA set from the group of PA sets, using one or more PAs included in the selected PA set to establish one or more contact-agent pairs. Put another way, each contact-agent pair is established by one of the PAs included in the selected PA set, as a consequence of selecting said PA set.

By "establish one or more contact-agent pairs" it is meant that one or more pairs of contacts and agents are connected across a telecommunications network. In other words, a telecommunications network is used to establish the connection between the contact's terminal or computing device (e.g. a mobile device, a computer, and the like) and the agent's terminal or computing device (e.g. a mobile device, a computer, and the like) of one or more pairs of contacts and agents. Such establishing comprises several steps.

First, a PA from the one or more PAs included in the selected PA set is selected by a pairing module. This may involve any of the switching techniques discussed herein. For example, selecting a PA from the one or more PAs included in the selected PA set comprises generating a pseudo random value (PRV) and using the PRV to select from the one or more PAs included in the selected PA set.

Once the PA of the PA set has been selected, the selected PA is used by the pairing module to determine a contact-agent pair from one of the available contacts with one of the available agents. The available contacts are determined by the contact information that the pairing module receives from the switch. The switch may also provide agent information to the pairing module of the available agents. The determined contact-agent pair depends on the PA that is used. Different PAs may favor different contact-agent pairs at any one instance.

Next, the pairing module passes an instruction to the switch (e.g., switch 120 of FIG. 1A, switches 120A 120B and 110 of FIG. 1B, for example) to connect the determined agent and contact. An agent identifier and contact identifier corresponding to the determined contact-agent pair may be provided to the switch for this purpose. This causes the switch to establish the connection between the determined contact-agent pair. This involves routing the contact to the agent via one or more telecommunications network(s) (e.g., telecommunications network 260 of FIG. 2A-2D or telecommunications network 1260 of FIG. 3). This establishes the connection between the agent's terminal or computing device and the contact's terminal or computing device. In other words, the agent's terminal or computing device and the contact's terminal or computing device become communicatively coupled via the one or more telecommunications network(s). An interaction between the contact (i.e., the user) and the agent (i.e. a user) may then take place.

In some embodiments, selecting a PA set from the group of PA sets comprises using an epoch switching technique or an inline switching technique, as discussed herein. For epoch switching, the selecting step may comprise selecting a PA set from the group of PA sets based on a time value indicating a time of day or indicating an amount time (i.e., a time interval) that has elapsed since the PA set last switched (i.e. an epoch). Various suitable time intervals and switching periods discussed herein with respect to switching between PAs may also be applied to switching between PA sets. Alternatively, the selecting step may comprise selecting a PA set from the group of PA sets based on inline switching. For example, the PA set may be selected based on a generated pseudo random value (PRV). As discussed herein with respect to switching between PAs, the PRV may be generated by a PRNG that is seeded with a contact identifier or other number such as a time of day. The same techniques may be used when switching between PA sets.

In some embodiments, once a plurality of contact-agent pairs have been established, the method further comprises measuring a performance metric attributed the one or more PAs included in the selected PA set for the plurality of contact-agent pairs; and outputting comparative measurements of the one or more PAs included in the selected PA set. The performance metrics are those referred to previously, which may be measured by the measuring module 140. The measuring module 140 works in conjunction with the pairing module as previously discussed. The output of the comparison may be provided in a suitable graphic or table, for example. When the comparative measurements provide a comparison between the second PA and the third PA, this allows the third-party provider to understand, with accuracy, how the second PA compared to the first PA.

In some embodiments, contact information indicating a plurality of contacts available for pairing is received from one or more of the switches in the contact center system. The one or more switches includes contact center system switch 120 of FIG. 1A, contact center system switches 120A and 120B of FIG. 1B, as well as the equivalent virtual switches in CCaaS 270. The plurality of contacts available for pairing may be in a queue.

The contact information is any information that identifies individual contacts of the plurality of available contacts, such as a contact identifier. The contact identifier is unique so that each contact may be individually identified. Example types of contact identifier include a telephone number, an Internet Protocol (IP) address, a Media Access Control (MAC) address, a Universally Unique Identifier (UUID), a serial number of the contact's device, an identification number, an email address, a chat ID, a case number, and an account number, of the contact. Such contact information is received at the one or more switches from the pairing module. The same contact information which identifies available contacts is later used to instruct the switch to establish a contact-agent pair.

In such embodiments, the further comprises obtaining, by the at least one computer processor (i.e. the one or more processors 1255) communicatively coupled to and configured to operate in the contact center system, the contact information indicating the plurality of available contacts, wherein each of the plurality of available contacts is available for pairing (i.e. to one of a plurality of available agents). In such embodiments, the step of using one or more PAs included in the selected PA set to establish one or more contact-agent pairs comprises selecting a PA included in the selected PA set and using the selected PA to pair one of the available contacts with one of the available agents comprises using the contact information (as discussed above). In other words, the same contact information which identifies available contacts is then used to instruct the switch to pair said contact.

In some embodiments, the selected PA set is the second PA set, and selecting a PA included in the second PA set comprises generating a PRV and using the PRV to select a PA included in the second PA set. Methods for generating a PRV using a PRNG are discussed elsewhere herein. As discussed herein, for each PRV, a predetermined PA is set. For instance, if the PRV may take values of "0" and "1", then the predetermined PA for a PRV of "0" may be a 2D BP PA, whilst the predetermined PA for a PRV of "1" may be a 3D BP PA.

In some embodiments, the step of selecting a PA set from the group of PA sets comprises determining the current time of day; and selecting a PA set include in the group of PA sets based on the determined current time of day. The current time of day may be determined by querying a clock of the contact center system. The clock may be periodically updated via telecommunications network 260, 1260 to ensure accuracy with an Internet clock, so that the contact center system time does not drift across different months, years, etc. It is noted that the epoch switching embodiments described herein refer to switching between PA at a particular frequency and/or in a particular cycle. In such embodiments, a schedule of PA to be switched to at different times of day may be determined. Examples schedules are shown in Table I, II and III. The same may be applied to PA sets not just PAs. In other words, a schedule of PA sets to be switched to at different times of day may be determined. Such a schedule may be compared against the determined current time of day to select the PA set to be used at the current time of day.

In some embodiments, the step of using the one or more PA included in the selected PA set to establish one or more contact-agent pairs comprises: for a first specified duration of time, using the one or more PAs included in the selected PA set to establish the one or more contact-agent pairs. The (first) specified duration of time may be defined by the switching frequency of epoch switching used between the PA sets. Various switching frequencies for switching between PAs are discussed herein, and the same considerations apply to switching between PA sets. The switching frequency between PA sets is lower than the switching frequency between PAs within a set. Accordingly, whilst switching frequencies in minutes are discussed herein for switching between PA sets, switching frequencies in hours are typically more appropriate for switching between PA sets. That said, switching frequencies in minutes still may be used for switching between PA sets, e.g., 6 minutes, as long as the switching frequency within a PA set is less than this. A similar strategy to selecting a number of minutes for the switching period that is not a prime number of minutes and not a factor of 60 minutes may also be used when switching between PA sets, with either hours or a number of minutes that is greater than 6 minutes. For instance, the switching period between PA sets may be not a prime number of hours and/or not a factor of 8 hours (assuming the contact center system is available for pairing for 8 hours per day).

In any event, establishing one or more contact-agent pairs using the one or more PAs included in the selected PA set may comprise using any of the switching techniques discussed herein among the one or more PAs. For instance, any one of epoch switching, inline switching, hybrid switching, three-way switching, and switching between providers, may be used.

In a particular embodiment, the selected PA set is the second PA set, the first PA set consists of the first PA, and the method further comprises: determining that the first specified duration of time has elapsed; and as a result of determining that the first specified duration of time has elapsed, for at least a second specified duration of time, using the first PA set to establish a plurality of contact-agent pairs. In other words, the second PA set is used first for the first specified duration, and once this has elapsed, then the first PA set is used. In some embodiments, determining that the (first) specified duration of time has elapsed may be determined by querying the clock of the contact center system. In such embodiments, the clock may be queried each time the contact center system needs to establish a contact-agent pair. In other words, the contact center system may pull in the timing information. In other embodiments, the timing information may be pushed to the contact center system. For instance, a timer may be set alongside the (first) specified duration and notify the contact center system once elapsed. As with the first specified duration of time, the second specified duration of time is defined by the switching frequency of epoch switching used between the PA sets. Various switching frequencies for switching between PAs are discussed herein, and the same considerations apply to switching between PA sets. In particular, considerations about the duty cycle, as discussed herein for switching between PAs, also applies to PA sets. For instance, the first PA set and the second PA set may have a balanced duty cycle (each PA set is used 50% of the time) or an unbalanced duty cycle. For example, the first PA set may have a lower duty cycle than the second PA set (e.g., 20% of time the first PA set is used, whilst 80% of time the second PA set is used).

In some embodiments, the first PA is a first-in-first-out (FIFO) PA, the second PA is a two-dimensional BP PA, and the second PA is an n-dimensional behavioral 2S BP PA, where n > 2. In such embodiments, the first PA set is provided by a first provider and the second PA set is provided by a second provider. The first provider may be the contact center system itself, in which case the first PA may be in an integrated pairing module. The second provider may be a third-party provider, in which case the second and third PAs may be in a separate pairing module.

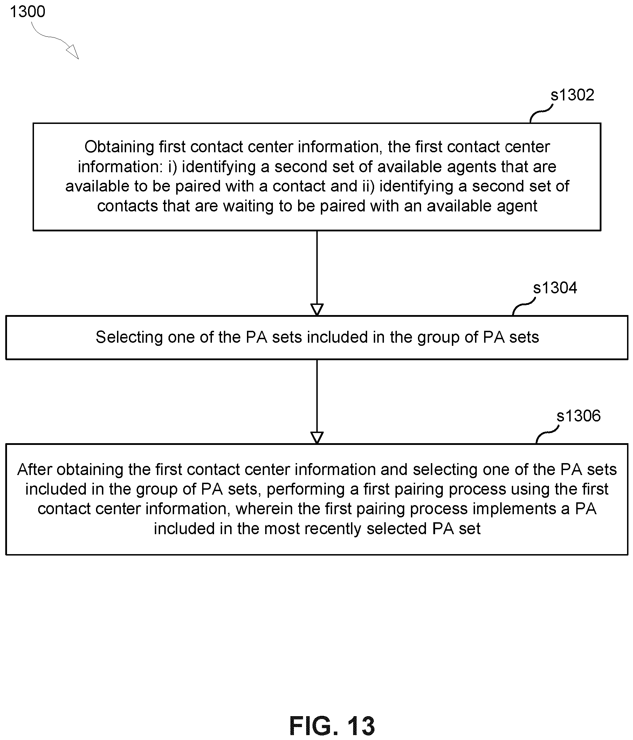

FIG. 13 shows a process 1300 according to some embodiments of the present disclosure. The process 1000 may be implemented in any of the contact center systems discussed herein (e.g., contact center system 100A of FIG. 1A, contact center system 100B of FIG. 1B, contact center system 250 of FIG. 2A, contact center system as a service 270 in FIG. 2B-2D). In particular, the process 1100 may be performed using a pairing module of the contact center system (for example, a pairing module of a particular node, and/or a set of primary and secondary pairing modules). The pairing module may be provided by a third-party provider. The process 1000 may be implemented by at least one computer processor (i.e., the one or more processors 1255) communicatively coupled to and configured to operate in the contact center system. In particular, the pairing module provides CP 1243 (and thus CRI 1244) to be executed by the one or more processors 1255.

Process 1300 is useful for when both contacts and agents are available, in surplus, for pairing. This allows for batch pairing, where a batch of contacts and agents are selected for pairing all according to the same pairing algorithm. A batch of contact-agent pairs may be established from the batch of contacts and batch of agents. This may occur at (substantially) the same time for all contact-agent pairs in the batch. This is advantageous over process 1100 of FIG. 12 because the contact center system does not have to obtain updated contact information each time a pairing to an agent is to be made.

Process 1300 may begin with step s1302. Step s1302 comprises obtaining first contact center information, the first contact center information comprising contact information that identifies available contacts and agent information that identifies available agents. As previously discussed with respect to process 1100, the contact information may be a contact identifier. Similarly, the agent information may be an agent identifier. Like the contact identifier, the agent identifier is unique so that each agent may be individually indicated. Example types of agent identifier include agent telephone number, Internet Protocol (IP) address, a Media Access Control (MAC) address, a Universally Unique Identifier (UUID), a serial number of the agent's device, agent identification number, agent username, agent extension number, agent email address, SIP (Session Initiation Protocol) URI (Uniform Resource Identifier), and the like. Put another way, the first contact center information contains information: i) identifying a first set of available agents that are available to be paired with a contact and ii) identifying a first set of contacts that are waiting to be paired with an available agent. Such information may be obtained from a switch of the contact center system.

Following step s1302, step s1304 may be performed. Step s1304 comprises selecting a pairing algorithm (PA) set from a group of two or more PA sets. In embodiments, the group of PA sets comprises: i) a first PA set comprising a first PA and ii) a second PA set comprising a second PA and a third PA. This step is performed in the same way as the selecting of step s1102 of FIG. 12, as discussed above.

Following step s1304, step s1305 may be performed. Step s1306 comprises, after obtaining the first contact center information and after selecting the pairing algorithm set, performing a first pairing process using the first contact center information, wherein the first pairing process implements a PA included in the selected PA set. In this context, "pairing process" refers to establishing more than one, i.e., a batch of, contact-agent pairs. This contrasts with step s1104 of process 1100, where contact-agent pairs may be established one-by-one. Otherwise, this step is similar to step s1104 of process 1100 in that it involves using one of the PAs included in the selected PA set to establish one or more contact pairs using any of the switching techniques discussed herein. Thus, the discussion with respect to step s1104 also applies to step s1304 of process 1300.

In some embodiments, once a plurality of contact-agent pairs has been established, the method further comprises comparatively measuring two or more of the PAs. Comparatively measuring two or more of the PAs comprises, for each contact-agent pair, measuring a performance metric attributed to the selected PAs. Comparatively measuring may also comprise comparing the measurements. Once the PAs have been compared, the output of the comparison may be outputted. For instance, the output of the comparison may be provided in a suitable graphic or table. In some embodiments, the method further comprises, after performing the first pairing process: obtaining second contact center information, the second contact center information: i) identifying a second set of available agents that are available to be paired with a contact and ii) identifying a second set of contacts that are waiting to be paired with an available agent; selecting one of the PA sets included in the group of PA sets; and after obtaining the second contact center information and selecting one of the PA sets included in the group of PA sets, performing a second pairing process using the second contact center information, wherein the second pairing process implements a PA included in the most recently selected PA set. The second pairing process is essentially a second batch of contact-agent pairs.

Once a plurality of batches of contact-agent pairs have been established, the pairing module may measure a performance metric attributed to the PA included in the selected PA set for each batch. For instance, once two batches of contact-agent pairs have been established, the pairing module may measure a performance metric attributed the PA included in the most recently selected PA set and the PA included in the previously selected PA set. The performance metrics are discussed previously herein. Subsequently, the comparative measurements of the PA included in the most recently selected PA set and the PA included in the previously selected PA set are output in a similar way to as discussed with respect to the comparative measurements of process 1100.

### General

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Further, although the present disclosure has been described herein in the context of at least one particular implementation in at least one particular environment for at least one particular purpose, those of ordinary skill in the art will recognize that its usefulness is not limited thereto and that the present disclosure may be beneficially implemented in any number of environments for any number of purposes. The scope of protection is defined by the appended claims.

The description herein describes network elements, computers, and/or components of a system and method for simulating contact center systems that may include one or more modules. As used herein, the term "module" may be understood to refer to computing software, firmware, hardware, and/or various combinations thereof. Modules, however, are not to be interpreted as software which is not implemented on hardware, firmware, or recorded on a processor readable recordable storage medium (i.e., modules are not software per se). It is noted that the modules are exemplary. The modules may be combined, integrated, separated, and/or duplicated to support various applications. Also, a function described herein as being performed at a particular module may be performed at one or more other modules and/or by one or more other devices instead of or in addition to the function performed at the particular module. Further, the modules may be implemented across multiple devices and/or other components local or remote to one another. Additionally, the modules may be moved from one device and added to another device, and/or may be included in both devices.

While various embodiments are described herein, it should be understood that they have been presented by way of example only, and not limitation. Thus, the breadth and scope of this disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method for improving comparative measurements of pairing algorithms in a contact center system (100A; 100B; 250; 270), the contact center system comprising a switch (120; 120A; 120B) that is communicatively coupled to a plurality of agents (151A, 151B, 151C, 151D; 251A, 251B) and at least one computer processor (1255) communicatively coupled to and configured to operate in the contact center system (100A; 100B; 250; 270), wherein the method is performed by the at least one computer processor (1255) and comprises:
selecting a pairing algorithm PA set from a group of PA sets, the group of PA sets comprising:
i) a first PA set comprising a first PA, and
ii) a second PA set comprising a second PA and a third PA;
as a result of selecting a PA set from the group of PA sets, using one or more PAs included in the selected PA set to establish a connection between a plurality of contact-agent pairs across a telecommunications network (1260) via the switch (120; 120A; 120B);
measuring a performance metric attributed to the one or more PAs included in the selected PA set for the plurality of contact-agent pairs; and
outputting comparative measurements of the one or more PAs included in the selected PA set.

2. The method of claim 1, further comprising
receiving, from the switch (1255), contact information indicating a plurality of available contacts (152A, 152B, 152C, 152D; 252A, 252B), wherein each of the plurality of available contacts is available for pairing to one of a plurality of available agents of the plurality of agents (151A, 151B, 151C, 151D; 251A, 251B).

3. The method of claim 2, wherein the contact information comprises a contact identifier for each of the plurality of available contacts (152A, 152B, 152C, 152D; 252A, 252B).

4. The method of claim 2 or 3, wherein using one or more PAs included in the selected PA set to establish a connection between one or more contact-agent pairs across the telecommunications network (1260) via the switch (120; 120A; 120B) comprises:
selecting a PA from the one or more PAs included in the selected PA set; and
using the selected PA to determine a contact-agent pair from one of the available contacts with one of the available agents.

5. The method of claim 4, wherein selecting a PA from the one or more PAs included in the selected PA set comprises generating a pseudo random value PRV and using the PRV to select from the one or more PAs included in the selected PA set.

6. The method of claim 4 or 5, wherein using one or more PAs included in the selected PA set to establish a connection between one or more contact-agent pairs across the telecommunications network (1260) via the switch (120; 120A; 120B) further comprises:
providing an instruction to the switch (120; 120A; 120B) to connect the contact-agent pair, wherein the switch establishes the connection between the determined contact-agent pair, thereby causing the agent's terminal or computing device and the contact's terminal or computing device to be communicatively coupled across the telecommunications network (1260).

7. The method of claim 6, wherein the instruction comprises a contact identifier and an agent identifier of the determined contact-agent pair.

8. The method of any preceding claim, wherein the first PA set is provided by a first provider and the second PA set is provided by a second provider.

9. The method of claim 8, wherein the first provider is a first party provider of the contact center system and the second provider is a third-party provider.

10. The method of claim 1, wherein the comparative measurements provide a comparison between the second PA and the third PA.

11. The method of any preceding claim, wherein selecting a PA set from the group of PA sets comprises:
selecting a PA set from the group of PA sets based on a predefined time interval, the predefined time interval indicating a time of day or indicating an amount of time that has elapsed since the PA set last switched,
selecting a PA set from the group of PA sets based on the current time of day, or
selecting a PA set from the group of PA sets based on a generated pseudo random value PRV

12. A computer program comprising instructions which when executed by at least one computer processor communicatively coupled to and configured to operate in a contact center system (100A; 100B; 250; 270), cause the contact center system to perform the method of any preceding claim.

13. A contact center system (100A; 100B; 250; 270) comprising:
a switch (120; 120A, 120B) that is communicatively coupled to a plurality of agents (151A, 151B, 151C, 151D; 251A, 251B); and
at least one computer processor (1255) communicatively coupled to and configured to operate in the contact center system,
wherein the at least one computer processor is configured to cause the contact center system to perform the method of any of claims 1-11.

14. A pairing module (174), the pairing module comprising:
a memory (1242) and
at least one computer processor communicatively (1255) coupled to and configured to operate in a contact center system (100A; 100B; 250; 270),
wherein the at least one computer processor is configured to cause the contact center system to perform the method of any of claims 1-11.

## Patentansprüche

1. Verfahren zum Verbessern von vergleichenden Messungen von Paarungsalgorithmen in einem Contact Center-System (100A; 100B; 250; 270), wobei das Contact Center-System einen Switch (120; 120A; 120B) umfasst, der kommunikativ mit mehreren Agenten (151A, 151B, 151C, 151D; 251A, 251B) gekoppelt ist, und mindestens einen Computerprozessor (1255), der kommunikativ mit dem Contact Center-System (100A; 100B; 250; 270) gekoppelt und dazu ausgebildet ist, in diesem zu arbeiten, wobei das Verfahren durch den mindestens einen Computerprozessor (1255) durchgeführt wird und Folgendes umfasst:
Auswählen eines Paarungsalgorithmus-(PA)-Satzes aus einer Gruppe von PA-Sätzen, wobei die Gruppe von PA-Sätzen Folgendes umfasst:
i) einen ersten PA-Satz, der einen ersten PA umfasst, und
ii) einen zweiten PA-Satz, der einen zweiten PA und einen dritten PA umfasst;
als Ergebnis des Auswählens eines PA-Satzes aus der Gruppe von PA-Sätzen unter Verwendung einer oder mehrerer in dem ausgewählten PA-Satz enthaltener PAs zum Herstellen einer Verbindung zwischen mehreren Kontaktagentenpaaren über ein Telekommunikationsnetzwerk (1260) über den Switch (120; 120A; 120B);
Messen einer Leistungsmetrik, die der einen oder den mehreren PAs zugeordnet ist, die in dem ausgewählten PA-Satz für die mehreren Kontaktagentenpaare enthalten sind; und
Ausgeben von vergleichenden Messungen der einen oder mehreren PAs, die in dem ausgewählten PA-Satz enthalten sind.

2. Verfahren nach Anspruch 1, das ferner Folgendes umfasst:
Empfangen, von dem Switch (1255), von Kontaktinformationen, die eine Vielzahl von verfügbaren Kontakten (152A, 152B, 152C, 152D; 252A, 252B) angeben, wobei jeder der Vielzahl von verfügbaren Kontakten zum Paaren mit einem einer Vielzahl von verfügbaren Agenten der Vielzahl von Agenten (151A, 151B, 151C, 151D; 251A, 251B) verfügbar ist.

3. Verfahren nach Anspruch 2, wobei die Kontaktinformationen eine Kontaktkennung für jeden der mehreren verfügbaren Kontakte (152A, 152B, 152C, 152D; 252A, 252B) umfassen.

4. Verfahren nach Anspruch 2 oder 3, wobei das Verwenden eines oder mehrerer PAs, die in dem ausgewählten PA-Satz enthalten sind, um eine Verbindung zwischen einem oder mehreren Kontaktagentenpaaren über das Telekommunikationsnetzwerk (1260) über den Switch (120; 120A; 120B) herzustellen, Folgendes umfasst:
Auswählen eines PA aus dem einen oder den mehreren PAs, die in dem ausgewählten PA-Satz enthalten sind; und
Verwenden des ausgewählten PA, um ein Kontaktagentenpaar aus einem der verfügbaren Kontakte mit einem der verfügbaren Agenten zu bestimmen.

5. Verfahren nach Anspruch 4, wobei das Auswählen eines PA aus dem einen oder den mehreren PAs, die in dem ausgewählten PA-Satz enthalten sind, das Erzeugen eines Pseudozufallswertes (PRV) und das Verwenden des PRV zum Auswählen aus dem einen oder den mehreren PAs, die in dem ausgewählten PA-Satz enthalten sind, umfasst.

6. Verfahren nach Anspruch 4 oder 5, wobei das Verwenden eines oder mehrerer PAs, die in dem ausgewählten PA-Satz enthalten sind, um eine Verbindung zwischen einem oder mehreren Kontaktagentenpaaren über das Telekommunikationsnetzwerk (1260) über den Switch (120; 120A; 120B) herzustellen, ferner Folgendes umfasst: Bereitstellen einer Anweisung an den Switch (120; 120A; 120B) zum Verbinden des Kontaktagentenpaars, wobei der Switch die Verbindung zwischen dem bestimmten Kontaktagentenpaar herstellt, wodurch bewirkt wird, dass das Endgerät oder die Rechenvorrichtung des Agenten und das Endgerät oder die Rechenvorrichtung des Kontakts kommunikativ über das Telekommunikationsnetzwerk (1260) gekoppelt werden.

7. Verfahren nach Anspruch 6, wobei die Anweisung eine Kontaktkennung und eine Agentenkennung des bestimmten Kontaktagentenpaars umfasst.

8. Verfahren nach einem der vorhergehenden Ansprüche, wobei der erste PA-Satz durch einen ersten Anbieter bereitgestellt wird und der zweite PA-Satz durch einen zweiten Anbieter bereitgestellt wird.

9. Verfahren nach Anspruch 8, wobei der erste Anbieter ein Anbieter eines ersten Anbieters des Contact Center-Systems ist und der zweite Anbieter ein Anbieter eines dritten Anbieters ist.

10. Verfahren nach Anspruch 1, wobei die Vergleichsmessungen einen Vergleich zwischen dem zweiten PA und dem dritten PA bereitstellen.

11. Verfahren nach einem der vorhergehenden Ansprüche, wobei das Auswählen eines PA-Satzes aus der Gruppe von PA-Sätzen Folgendes umfasst:
Auswählen eines PA-Satzes aus der Gruppe von PA-Sätzen basierend auf einem vordefinierten Zeitintervall, wobei das vordefinierte Zeitintervall eine Tageszeit angibt oder eine Zeitdauer angibt, die seit dem letzten Schalten des PA-Satzes verstrichen ist,
Auswählen eines PA-Satzes aus der Gruppe von PA-Sätzen basierend auf der aktuellen Tageszeit oder Auswählen eines PA-Satzes aus der Gruppe von PA-Sätzen basierend auf einem erzeugten Pseudozufallswert (PRV).

12. Computerprogramm, das Anweisungen umfasst, die, wenn sie durch mindestens einen Computerprozessor ausgeführt werden, der kommunikativ mit einem Contact Center-System (100A; 100B; 250; 270) gekoppelt ist und dazu ausgebildet ist, in diesem zu arbeiten, das Contact Center-System veranlassen, das Verfahren nach einem der vorhergehenden Ansprüche durchzuführen.

13. Contact Center-System (100A; 100B; 250; 270), das Folgendes umfasst:
ein Switch (120; 120A, 120B), der kommunikativ mit einer Vielzahl von Agenten (151A, 151B, 151C, 151D; 251A, 251B) gekoppelt ist; und
mindestens einen Computerprozessor (1255), der kommunikativ mit dem Contact Center-System gekoppelt und dazu ausgebildet ist, in diesem zu arbeiten,
wobei der mindestens eine Computerprozessor dazu ausgebildet ist, zu bewirken, dass das Contact Center-System das Verfahren nach einem der Ansprüche 1-11 durchführt.

14. Paarungsmodul (174), wobei das Paarungsmodul Folgendes umfasst:
einen Speicher (1242) und
mindestens einen Computerprozessor (1255), der kommunikativ mit einem Contact Center-System (100A; 100B; 250; 270) gekoppelt ist und dazu ausgebildet ist, in diesem zu arbeiten,
wobei der mindestens eine Computerprozessor dazu ausgebildet ist, zu bewirken, dass das Contact Center-System das Verfahren nach einem der Ansprüche 1-11 durchführt.

## Revendications

1. Procédé d'amélioration de mesures comparatives d'algorithmes d'appariement dans un système de centre de contact (100A ; 100B ; 250 ; 270), le système de centre de contact comprenant un commutateur (120 ; 120A ; 120B) qui est couplé en communication à une pluralité d'agents (151A, 151B, 151C, 151D ; 251A, 251B) et au moins un processeur informatique (1255) couplé en communication au système de centre de contact (100A ; 100B ; 250 ; 270) et configuré pour fonctionner dans celui-ci, le procédé étant exécuté par l'au moins un processeur informatique (1255) et comprend les étapes consistant à :
sélectionner un ensemble d'algorithmes d'appariement (PA) dans un groupe d'ensembles de PA, le groupe d'ensembles de PA comprenant :
i) un premier ensemble de PA comprenant un premier PA, et
ii) un second ensemble de PA comprenant un deuxième PA et un troisième PA ;
à la suite de la sélection d'un ensemble de PA dans le groupe d'ensembles de PA, utiliser un ou plusieurs PA compris dans l'ensemble de PA sélectionné pour établir une connexion entre une pluralité de paires contact-agent dans un réseau de télécommunications (1260) par l'intermédiaire du commutateur (120 ; 120A ; 120B) ;
mesurer un indicateur métrique de performances attribué au ou aux PA compris dans l'ensemble de PA sélectionné pour la pluralité de paires contact-agent ; et
délivrer en sortie des mesures comparatives du ou des PA compris dans l'ensemble de PA sélectionné.

2. Procédé selon la revendication 1, comprenant en outre l'étape consistant à :
recevoir, en provenance du commutateur (1255), des informations de contact indiquant une pluralité de contacts disponibles (152A, 152B, 152C, 152D ; 252A, 252B), chaque contact parmi la pluralité de contacts disponibles étant disponible pour être apparié à un agent parmi une pluralité d'agents disponibles parmi la pluralité d'agents (151A, 151B, 151C, 151D ; 251A, 251B).

3. Procédé selon la revendication 2, dans lequel les informations de contact comprennent un identifiant de contact pour chaque contact parmi la pluralité de contacts disponibles (152A, 152B, 152C, 152D ; 252A, 252B).

4. Procédé selon la revendication 2 ou 3, dans lequel l'utilisation d'un ou plusieurs PA compris dans l'ensemble de PA sélectionné pour établir une connexion entre une ou plusieurs paires contact-agent dans le réseau de télécommunications (1260) par l'intermédiaire du commutateur (120 ; 120A ; 120B) comprend les étapes consistant à :
sélectionner un PA parmi le ou les PA compris dans l'ensemble de PA sélectionné ; et
utiliser le PA sélectionné pour déterminer une paire contact-agent à partir d'un des contacts disponibles avec un des agents disponibles.

5. Procédé selon la revendication 4, dans lequel la sélection d'un PA parmi le ou les PA compris dans l'ensemble de PA sélectionné comprend les étapes consistant à générer une valeur pseudo-aléatoire (PRV) et à utiliser la PRV pour sélectionner parmi le ou les PA compris dans l'ensemble de PA sélectionné.

6. Procédé selon la revendication 4 ou 5, dans lequel l'utilisation d'un ou plusieurs PA compris dans l'ensemble de PA sélectionné pour établir une connexion entre une ou plusieurs paires contact-agent dans le réseau de télécommunications (1260) par l'intermédiaire du commutateur (120 ; 120A ; 120B) comprend en outre l'étape consistant à :
fournir une instruction au commutateur (120 ; 120A ; 120B) pour connecter la paire contact-agent, le commutateur établissant la connexion entre la paire contact-agent déterminée, ce qui amène le terminal ou le dispositif informatique de l'agent et le terminal ou le dispositif informatique du contact à être couplés en communication dans le réseau de télécommunications (1260).

7. Procédé selon la revendication 6, dans lequel l'instruction comprend un identifiant de contact et un identifiant d'agent de la paire contact-agent déterminée.

8. Procédé selon l'une quelconque des revendications précédentes, dans lequel le premier ensemble de PA est fourni par un premier fournisseur et le second ensemble de PA est fourni par un second fournisseur.

9. Procédé selon la revendication 8, dans lequel le premier fournisseur est un fournisseur de première partie du système de centre de contact et le second fournisseur est un fournisseur de tierce partie.

10. Procédé selon la revendication 1, dans lequel les mesures comparatives fournissent une comparaison entre le deuxième PA et le troisième PA.

11. Procédé selon l'une quelconque des revendications précédentes, dans lequel la sélection d'un ensemble de PA dans le groupe d'ensembles de PA comprend les étapes consistant à :
sélectionner un ensemble de PA dans le groupe d'ensembles de PA sur la base d'un intervalle de temps prédéfini, l'intervalle de temps prédéfini indiquant une heure du jour ou indiquant un laps de temps qui s'est écoulé depuis la dernière commutation de l'ensemble de PA,
sélectionner un ensemble de PA dans le groupe d'ensembles PA sur la base de l'heure actuelle du jour ou sélectionner un ensemble de PA dans le groupe d'ensembles de PA sur la base d'une valeur pseudo-aléatoire (PRV) générée.

12. Programme informatique comprenant des instructions qui, lorsqu'elles sont exécutées par au moins un processeur informatique couplé en communication à un système de centre de contact (100A ; 100B ; 250 ; 270) et configuré pour fonctionner dans celui-ci, amènent le système de centre de contact à exécuter le procédé selon l'une quelconque des revendications précédentes.

13. Système de centre de contact (100A ; 100B ; 250 ; 270) comprenant :
un commutateur (120 ; 120A, 120B) qui est couplé en communication à une pluralité d'agents (151A, 151B, 151C, 151D ; 251A, 251B) ; et
au moins un processeur informatique (1255) couplé en communication au système de centre de contact et configuré pour fonctionner dans celui-ci,
l'au moins un processeur informatique étant configuré pour amener le système de centre de contact à exécuter le procédé selon l'une quelconque des revendications 1 à 11.

14. Module d'appariement (174), le module d'appariement comprenant :
une mémoire (1242) et
au moins un processeur informatique (1255) couplé en communication à un système de centre de contact (100A ; 100B ; 250 ; 270) et configuré pour fonctionner dans celui-ci,
l'au moins un processeur informatique étant configuré pour amener le système de centre de contact à exécuter le procédé selon l'une quelconque des revendications 1 à 11.
